# EUROPEAN PATENT APPLICATION

(11) **EP 4 672 591 A1**
(43) Date of publication of application: **31.12.2025**
(21) Application number: 24780749.8
(22) Date of filing: 28.03.2024
(51) Int. Cl.: H02P 25/098, H02P 6/17

(54) **DRIVE SYSTEM, TURBO COMPRESSOR, AND REFRIGERATION DEVICE**

(30) Priority: 31.03.2023 JP 2023057532
(71) Applicant: DAIKIN INDUSTRIES, LTD., Osaka 530-0001 (JP)
(72) Inventor: YAMAMOTO, Masahiro, Osaka-shi, Osaka 530-0001 (JP)
(74) Representative: Goddar, Heinz J.
(86) International application number: PCT/JP2024/012906
(87) International publication number: WO 2024/204651

(57) **Abstract**

A rotational angle detector (60) outputs a first signal (S1) on which a specific frequency component is superimposable. The first signal (S1) has an amplitude that changes in accordance with a change in a rotational angle of a shaft (20). A signal processing unit (80) generates, based on the first signal (S1), a second signal (S2) by performing a reduction process for reducing the specific frequency component included in the first signal (S1). A control unit (90) detects the rotational angle of the shaft (20) based on the second signal (S2). A frequency of the specific frequency component is lower than a frequency of a first frequency component (C1) included in the first signal (S1), the first frequency component (C1) being an alternating-current frequency component other than a direct-current component and corresponding to the change in the rotational angle of the shaft (20).

## Description

### Technical Field

The present disclosure relates to a drive system, a turbo compressor, and a refrigeration device.

### Background Art

PTL 1 discloses a rotation detection apparatus including a rotation detector, a shaft runout detector, and signal processing means. The rotation detector detects the rotation of a rotating member in a non-contact manner. The shaft runout detector detects the shaft runout of a rotating member in a non-contact manner. The signal processing means processes a rotation detection signal from the rotation detector and a shaft runout detection signal from the shaft runout detector and removes a shaft runout component from the signal component of the rotation detection signal.

### Citation List

### Patent Literature

PTL 1: Japanese Unexamined Patent Application Publication No. 2001-201362

### Summary of Invention

### Technical Problem

The apparatus disclosed in PTL 1 requires two sensors (the rotation detector and the shaft runout detector) to detect a change in the rotational angle of a rotating member. This makes it difficult to reduce the number of sensors for detecting a change in the rotational angle of the rotating member.

### Solution to Problem

A first aspect of the present disclosure relates to a drive system. The drive system includes: a shaft (20); a support unit (11) configured to support the shaft (20) in a non-contact manner using an electromagnetic force; a drive unit (12) configured to rotationally drive the shaft (20) using an electromagnetic force; a rotational angle detector (60) configured to output a first signal (S1) on which a specific frequency component is superimposable, the first signal (S1) having an amplitude that changes in accordance with a change in a rotational angle of the shaft (20); a signal processing unit (80) configured to generate, based on the first signal (S1) output from the rotational angle detector (60), a second signal (S2) by performing a reduction process for reducing the specific frequency component included in the first signal (S1); and a control unit (90) configured to control the support unit (11) and the drive unit (12). The control unit (90) is configured to detect the rotational angle of the shaft (20) based on the second signal (S2) generated by the signal processing unit (80). A frequency of the specific frequency component reduced by the reduction process is lower than a frequency of a first frequency component (C1) included in the first signal (S1), the first frequency component (C1) being an alternating-current frequency component other than a direct-current component and corresponding to the change in the rotational angle of the shaft (20).

In the first aspect, only one rotational angle detector (60) is needed to detect a change in the rotational angle of the shaft (20), thereby reducing the number of sensors for detecting a change in the rotational angle of the shaft (20).

According to a second aspect of the present disclosure, in the drive system according to the first aspect, the shaft (20) includes a measurement portion (25). The rotational angle detector (60) is a gap sensor configured to output a signal having an amplitude that changes in accordance with a distance from the measurement portion (25). The measurement portion (25) is configured to change in distance from the rotational angle detector (60) in accordance with the change in the rotational angle of the shaft (20). The first frequency component (C1) is a frequency corresponding to a rotational frequency of the shaft (20) that is rotationally driven by the drive unit (12) and a shape of the measurement portion (25).

In the second aspect, when the rotational angle of the shaft (20) varies, the distance between the measurement portion (25) of the shaft (20) and the rotational angle detector (60) changes, and as a result, the first signal (S1) output from the rotational angle detector (60) changes. This makes it possible to configure the first signal (S1) output from the rotational angle detector (60) as "a signal having an amplitude that changes in accordance with the change in the rotational angle of the shaft (20)".

According to a third aspect of the present disclosure, in the drive system according to the first or second aspect, the specific frequency component reduced by the reduction process includes a frequency component having a largest amplitude among frequency components lower than the frequency of the first frequency component (C1).

In the third aspect, "a frequency component having the largest amplitude among frequency components lower than the frequency of the first frequency component (C1)" that can be superimposed on the first signal (S1) can be reduced by the reduction process. This allows the second signal (S2) to be accurately generated so that its amplitude varies in accordance with the change in the rotational angle of the shaft (20), thereby enabling accurate detection of the rotational angle of the shaft (20) based on the second signal (S2).

According to a fourth aspect of the present disclosure, in the drive system according to the first or second aspect, the specific frequency component reduced by the reduction process includes a shaft runout component (CX) with a largest amplitude among a plurality of shaft runout components (CX) corresponding to a runout from a reference position of the shaft (20) supported in the non-contact manner.

In the fourth aspect, among the plurality of shaft runout components (CX) that can be superimposed on the first signal (S1), "a shaft runout component (CX) having a largest amplitude" can be reduced by the reduction process. This allows the second signal (S2) to be accurately generated so that its amplitude varies in accordance with the change in the rotational angle of the shaft (20), thereby enabling accurate detection of the rotational angle of the shaft (20) based on the second signal (S2).

According to a fifth aspect of the present disclosure, in the drive system according to any one of the first to fourth aspects, the reduction process is a process for reducing a frequency component in a specific frequency band included in the first signal (S1), and the specific frequency band is a frequency band including the frequency of the specific frequency component and is a frequency band lower than the frequency of the first frequency component (C1).

In the fifth aspect, frequency components having frequencies equal to or higher than that of the first frequency component (C1) (frequency components usable to detect the change in the rotational angle of the shaft (20)) are prevented from being reduced by the reduction process. This allows the second signal (S2) to be accurately generated such that its amplitude varies in accordance with the change in the rotational angle of the shaft (20), thereby enabling accurate detection of the rotational angle of the shaft (20) based on the second signal (S2).

According to a sixth aspect of the present disclosure, in the drive system according to any one of the first to fifth aspects, the signal processing unit (80) is configured to include: a first processing unit (81) configured to generate, based on the first signal (S1), a threshold (Th1) corresponding to the specific frequency component; and a second processing unit (82) configured to generate the second signal (S2) by comparing the amplitude of the first signal (S1) and the threshold (Th1) generated by the first processing unit (81).

In the sixth aspect, by comparing the amplitude of the first signal (S1) and the threshold (Th1) corresponding to the specific frequency component, "a signal in which the specific frequency component is reduced" acquired by the comparison can be used as the second signal (S2).

According to a seventh aspect of the present disclosure, in the drive system according to the sixth aspect, the first processing unit (81) is configured to generate the threshold (Th1) by extracting a frequency component in a specific frequency band included in the first signal (S1), and the specific frequency band is a frequency band including the frequency of the specific frequency component and is a frequency band lower than the frequency of the first frequency component (C1).

In the seventh aspect, by extracting a frequency component within the specific frequency band from the first signal (S1), the extracted frequency component can be used as "a threshold (Th1) corresponding to the specific frequency component".

According to an eighth aspect of the present disclosure, in the drive system according to the sixth aspect, the first processing unit (81) is configured to selectively perform: a first extraction process for generating the threshold (Th1) by extracting a frequency component in a specific frequency band included in the first signal (S1); and a second extraction process for generating the threshold (Th1) by extracting a direct-current component from the first signal (S1), and the specific frequency band is a frequency band including the frequency of the specific frequency component and is a frequency band lower than the frequency of the first frequency component (C1).

In the eighth aspect, the threshold (Th1) can be appropriately changed in accordance with the operating condition of the drive system (10).

According to a ninth aspect of the present disclosure, in the drive system according to the sixth aspect, the first processing unit (81) is configured to generate the threshold (Th1) by repeating a process of setting a value derived based on the amplitude of the first signal (S1) in a predetermined period as the threshold (Th1).

In the ninth aspect, the threshold (Th1) can be changed in accordance with the specific frequency component by repeatedly performing "the process of setting, as the threshold (Th1), a value derived based on the amplitude of the first signal (S1) during a predetermined period". Thus, the threshold (Th1) corresponding to the specific frequency component can be generated.

According to a 10th aspect of the present disclosure, in the drive system according to any one of the first to fifth aspects, the signal processing unit (80) is configured to include: a first processing unit (81) configured to reduce the specific frequency component included in the first signal (S1); and a second processing unit (82) configured to generate the second signal (S2) by comparing a signal obtained by the first processing unit (81) and a threshold (Th1).

In the 10th aspect, by comparing the amplitude of the first signal (S1) in which the specific frequency component is reduced with the threshold (Th1), "a signal in which the specific frequency component is reduced" acquired by the comparison can be used as the second signal (S2).

According to an 11th aspect of the present disclosure, the drive system according to any one of the first to 10th aspects includes a bearingless motor (30) including a support winding (35) and a drive winding (36). The support winding (35) is configured to generate, when energized, the electromagnetic force for supporting the shaft (20) in the non-contact manner and function as the support unit (11). The drive winding (36) is configured to generate, when energized, the electromagnetic force for rotationally driving the shaft (20) and function as the drive unit (12).

A 12th aspect of the present disclosure relates to a turbo compressor including the drive system according to any one of the first to 11th aspects.

A 13th aspect of the present disclosure relates to a refrigeration device including the turbo compressor according to the 12th aspect.

### Brief Description of Drawings

[Fig. 1] Fig. 1 is a schematic diagram illustrating the configuration of a refrigeration device according to an embodiment.
[Fig. 2] Fig. 2 is a cross-sectional view illustrating the configuration of a turbo compressor according to an embodiment.
[Fig. 3] Fig. 3 is a cross-sectional view illustrating a configuration of a first shaft portion of a measurement portion of a shaft.
[Fig. 4] Fig. 4 is a cross-sectional view illustrating a configuration of a second shaft portion of the measurement portion of the shaft.
[Fig. 5] Fig. 5 is a cross-sectional view illustrating a configuration of a bearingless motor.
[Fig. 6] Fig. 6 is a cross-sectional view illustrating a configuration of a radial magnetic bearing.
[Fig. 7] Fig. 7 is a waveform chart illustrating a change in a first signal due to a shaft runout.
[Fig. 8] Fig. 8 is a graph illustrating shaft runout components.
[Fig. 9] Fig. 9 is a diagram illustrating the relationship between a shaft runout component and a first frequency component, as well as a shaft runout frequency band.
[Fig. 10] Fig. 10 is a block diagram illustrating a configuration of a signal processing unit.
[Fig. 11] Fig. 11 is a waveform chart illustrating various signals processed by the signal processing unit.
[Fig. 12] Fig. 12 is a waveform chart illustrating a change in various signals in a rotational-angle detection process.
[Fig. 13] Fig. 13 is a block diagram illustrating the configuration of a signal processing unit according to Modification 1 of the embodiment.
[Fig. 14] Fig. 14 is a block diagram illustrating the configuration of a signal processing unit according to Modification 2 of the embodiment.
[Fig. 15] Fig. 15 is a waveform chart illustrating various signals processed by the signal processing unit illustrated in Fig. 14.
[Fig. 16] Fig. 16 is a block diagram illustrating the configuration of a signal processing unit according to Modification 3 of the embodiment.
[Fig. 17] Fig. 17 is a waveform chart illustrating various signals processed by the signal processing unit illustrated in Fig. 16.
[Fig. 18] Fig. 18 is a block diagram illustrating the configuration of a signal processing unit according to Modification 4 of the embodiment.
[Fig. 19] Fig. 19 is a waveform chart illustrating various signals processed by the signal processing unit illustrated in Fig. 18.
[Fig. 20] Fig. 20 is a block diagram illustrating the configuration of a signal processing unit according to Modification 5 of the embodiment.
[Fig. 21] Fig. 21 is a waveform chart illustrating various signals processed by the signal processing unit illustrated in Fig. 20.
[Fig. 22] Fig. 22 is a block diagram illustrating the configuration of a signal processing unit according to Modification 6 of the embodiment.
[Fig. 23] Fig. 23 is a waveform chart illustrating various signals processed by the signal processing unit illustrated in Fig. 22.

### Description of Embodiments

An embodiment will be described in detail hereinbelow with reference to the drawings. Like or corresponding parts throughout the drawings are given the same reference signs, and the descriptions are not repeated.

### (Refrigeration Device)

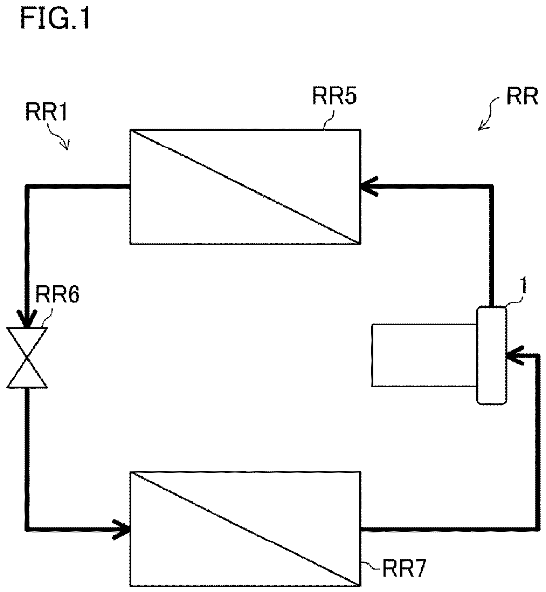

Fig. 1 illustrates the configuration of a refrigeration device (RR) according to an embodiment. The refrigeration device (RR) includes a refrigerant circuit (RR1) filled with a refrigerant. The refrigerant circuit (RR1) includes a turbo compressor (1), a radiator (RR5), a decompression mechanism (RR6), and an evaporator (RR7). In this example, the decompression mechanism (RR6) is an expansion valve. The refrigerant circuit (RR1) executes a vapor-compression refrigeration cycle.

In the refrigeration cycle, the refrigerant discharged from the turbo compressor (1) releases heat in the radiator (RR5). The refrigerant discharged from the radiator (RR5) is decompressed by the decompression mechanism (RR6) and evaporates in the evaporator (RR7). The refrigerant discharged from the evaporator (RR7) is taken into the turbo compressor (1).

In this example, the refrigeration device (RR) is an air conditioner. The air conditioner may be either a cooling-only air conditioner or a heating-only air conditioner. The air conditioner may be an air conditioner that switches between cooling and heating. In this case, the air conditioner includes a switching mechanism for switching the circulation direction of the refrigerant (for example, a four-way switching valve). The refrigeration device (RR) may be a water heater, a chiller unit, or a cooling apparatus that cools air inside the component. The cooling apparatus cools air inside a refrigeration device, a freezer, or a container.

### (Turbo Compressor)

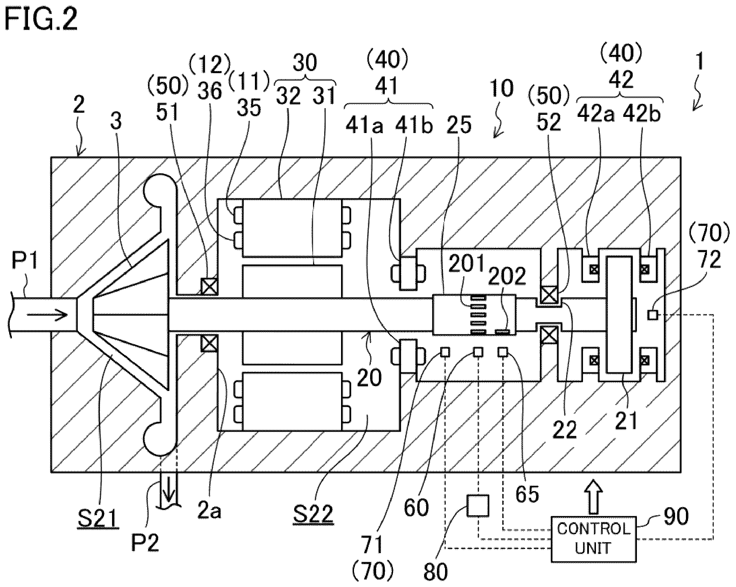

Fig. 2 illustrates the configuration of the turbo compressor (1) according to an embodiment. The turbo compressor (1) takes in fluid, compresses the fluid, and discharges the compressed fluid. In this example, the turbo compressor (1) includes a casing (2), an impeller (3), and a drive system (10). The drive system (10) includes a shaft (20), a bearingless motor (30), a magnetic bearing (40), and a touchdown bearing (50).

In the following description, the direction of the axis of a member is defined as the "axial direction" of the member. A direction perpendicular to the axis of a member is defined as the "radial direction" of the member. A direction around the axis of a member is defined as the "circumferential direction" of the member. For example, the axial direction of the shaft (20) is the direction of the axis of rotation of the shaft (20). The radial direction of the shaft (20) is a direction perpendicular to the axis of rotation of the shaft (20). The circumferential direction of the shaft (20) is a direction around the axis of rotation of the shaft (20).

### [Casing]

The casing (2) is formed in a cylindrical shape with both ends closed. The space in the casing (2) is divided into two spaces by a wall (2a). One space constitutes an impeller chamber (S21), and the other space constitutes a motor chamber (S22). The impeller chamber (S21) houses the impeller (3). The motor chamber (S22) houses the bearingless motor (30), the magnetic bearing (40), and the touchdown bearing (50), which are fixed to the inner peripheral wall of the motor chamber (S22). In this example, the casing (2) is disposed such that the axis of the casing (2) (the axis of the cylinder) is horizontally oriented.

### [Shaft]

The shaft (20) is housed in the casing (2). The shaft (20) extends from the impeller chamber (S21) to the motor chamber (S22) through the wall (2a). The shaft (20) has the impeller (3) fixed at one end. For example, the shaft (20) is made of a magnetic material such as iron.

In this example, the shaft (20) includes a disc portion (21), a recessed portion (22), and a measurement portion (25). The disc portion (21) is provided at the other end of the shaft (20). The recessed portion (22) is provided near the other end of the shaft (20). The recessed portion (22) is formed around the whole circumference of the shaft (20). The measurement portion (25) is provided between one end of the shaft (20) and the recessed portion (22).

The measurement portion (25) is configured such that the distance from a rotational angle sensor (60) to be described later varies in accordance with a change in the rotational angle of the shaft (20). In this example, the measurement portion (25) is configured such that the distance from a rotation reference sensor (65) to be described later varies in accordance with a change in the position of the rotation reference of the shaft (20). The measurement portion (25) is formed in a shaft shape. The measurement portion (25) includes a plurality of first stepped portions (201) and a second stepped portion (202).

The plurality of first stepped portions (201) is arranged at predetermined intervals in the circumferential direction of the shaft (20). The plurality of first stepped portions (201) is provided to detect a change in the rotational angle of the shaft (20).

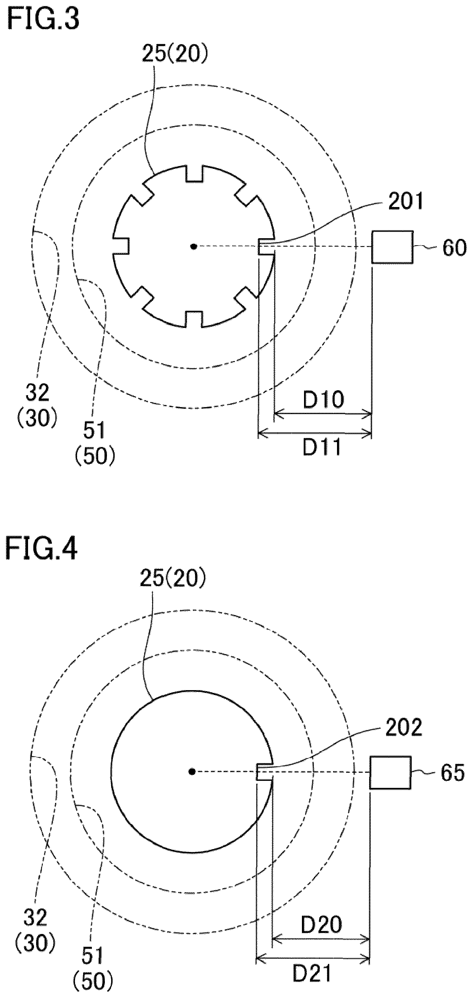

As illustrated in Fig. 3, eight first stepped portions (201) are provided at regular intervals in the circumferential direction of the shaft (20) in this example. The first stepped portions (201) are recessed portions (grooves). Of the measurement portion (25) of the shaft (20), a shaft portion provided with the first stepped portions (201) (hereinafter referred to as a "first shaft portion") is to be measured by the rotational angle sensor (60) to be described later.

The second stepped portion (202) is provided at a shaft portion adjacent to the first shaft portion (the shaft portion provided with the plurality of first stepped portions (201)) in the axial direction of the shaft (20). The second stepped portion (202) is provided to detect the rotation reference of the shaft (20).

As illustrated in Fig. 4, in this example, only one second stepped portion (202) is provided. The second stepped portion (202) is a recessed portion (a groove). Of the measurement portion (25) of the shaft (20), the shaft portion provided with the second stepped portion (202) (hereinafter referred to as "second shaft portion") is to be measured by the rotation reference sensor (65) to be described later.

### [Impeller]

The impeller (3) includes a plurality of blades and is formed in a substantially cone shape in outer shape. The impeller (3) is housed in the impeller chamber (S21) in a state of being fixed to one end of the shaft (20). The impeller chamber (S21) is connected to an inlet pipe (P1) and a discharge pipe (P2). The inlet pipe (P1) is provided to introduce fluid from the outside to the impeller chamber (S21). The discharge pipe (P2) is provided to introduce the high-pressure fluid compressed in the impeller chamber (S21) to the outside. In this example, the impeller (3) and the impeller chamber (S21) constitute a compression mechanism.

### [Bearingless Motor]

The bearingless motor (30) includes a rotor (31) and a stator (32), supports the shaft (20) in a non-contact manner using electromagnetic force, and rotationally drives the shaft (20). The rotor (31) is fixed to the shaft (20). The stator (32) is fixed to the inner peripheral wall of the casing (2). In this example, the bearingless motor (30) is disposed between one end of the shaft (20) (the end to which the impeller (3) is fixed) and the measurement portion (25).

Specifically, the bearingless motor (30) includes support windings (35) and drive windings (36). The support windings (35) and the drive windings (36) are provided at the stator (32).

The support windings (35) generate an electromagnetic force for supporting the shaft (20) in a non-contact manner when energized. The support windings (35) function as a support unit (11) that supports the shaft (20) in a non-contact manner using an electromagnetic force. The support winding (35) is one example of the support unit (11).

The drive windings (36) generate an electromagnetic force for rotationally driving the shaft (20) when energized. The drive windings (36) function as a drive unit (12) to rotationally drive the shaft (20) using an electromagnetic force. The drive winding (36) is one example of the drive unit (12).

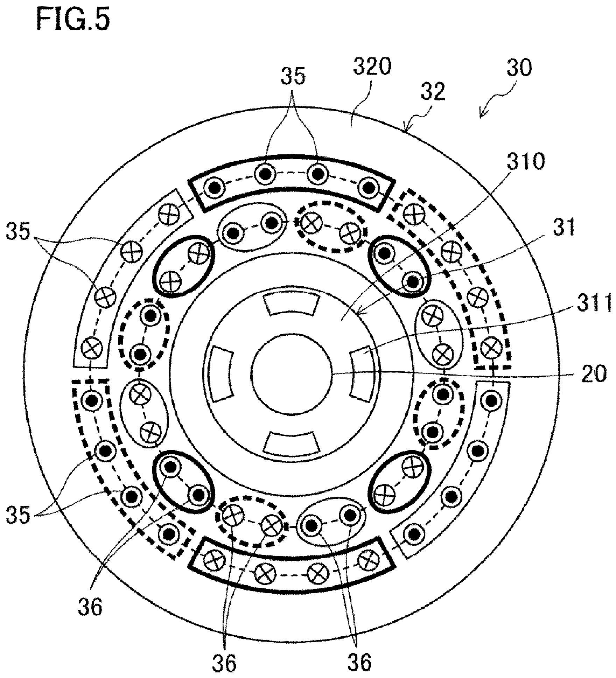

As illustrated in Fig. 5, in this example, the bearingless motor (30) is a consequent-pole type bearingless motor.

### <Rotor>

The rotor (31) includes a rotor core (310) and a plurality of permanent magnets (311). The rotor core (310) is made of a magnetic material and has a columnar shape. For example, the rotor core (310) is a laminated core in which disc-shaped electromagnetic steel sheets are stacked. The rotor core (310) has a shaft hole at the center, through which the shaft (20) is to be passed. The plurality of permanent magnets (311) is disposed at a predetermined angle pitch in the circumferential direction of the rotor (31).

In this example, the rotor (31) is provided with four permanent magnets (311). The four permanent magnets (311) are arranged at an angle pitch of 90° in the circumferential direction of the rotor (31) and are embedded along the outer circumferential region (in the vicinity of the outer circumferential surface) of the rotor core (310). The four permanent magnets (311) in the arc shape are arranged along the outer circumferential surface of the rotor core (310), with the outer circumferential sides thereof serving as north poles.

With this configuration, of the outer circumferential region of the rotor core (310), portions located between the four permanent magnets (311) in the circumferential direction of the rotor (31) serve as pseudo south poles. The outer circumferential sides of the four permanent magnets (311) may serve as south poles. In this case, of the outer circumferential region of the rotor core (310), portions located between the four permanent magnets (311) in the circumferential direction of the rotor (31) serve as pseudo north poles.

### <Stator>

The stator (32) faces the rotor (31), with a predetermined air gap therefrom. The stator (32) includes a stator core (320), support windings (35), and drive windings (36). The stator core (320) is made of a magnetic material. For example, the stator core (320) is a laminated core in which annular electromagnetic steel sheets are stacked. The stator core (320) includes a cylindrical back yoke and a plurality of teeth (not shown) provided along the inner circumferential surface of the back yoke.

The support windings (35) are wound around radially outer portions of the teeth of the stator core (320). In this example, the bearingless motor (30) includes three kinds of support windings (35). Specifically, the support windings (35) enclosed by the thick solid line in Fig. 5 constitute U-phase support windings. The support windings (35) enclosed by the thick broken line in Fig. 5 constitute V-phase support windings. The support windings (35) enclosed by a thin solid line in Fig. 5 constitute W-phase support windings.

The drive windings (36) are wound around the radially inner teeth of the teeth of the stator core (320). In this example, the bearingless motor (30) is provided with three kinds of drive windings (36). Specifically, in Fig. 5, the drive windings (36) enclosed by the thick solid line constitute U-phase drive windings. In Fig. 5, the drive windings (36) enclosed by the thick broken line constitute V-phase drive windings. In Fig. 5, the drive windings (36) enclosed by the thin solid line constitute W-phase drive windings.

### [Magnetic Bearing]

The magnetic bearing (40) includes a plurality of electromagnets and supports the shaft (20) in a non-contact manner using the electromagnetic force of the plurality of electromagnets. The magnetic bearing (40) controls the position of the shaft (20) using the electromagnetic force. The magnetic bearing (40) functions as the support unit (11) that supports the shaft (20) in a non-contact manner using the electromagnetic force. The magnetic bearing (40) is one example of the support unit (11). In this example, the magnetic bearing (40) includes a radial magnetic bearing (41) and a thrust magnetic bearing (42).

### <Radial Magnetic Bearing>

The radial magnetic bearing (41) controls the radial position of the shaft (20) in a non-contact manner using the electromagnetic force. In this example, the radial magnetic bearing (41) is disposed between the bearingless motor (30) and the measurement portion (25) of the shaft (20).

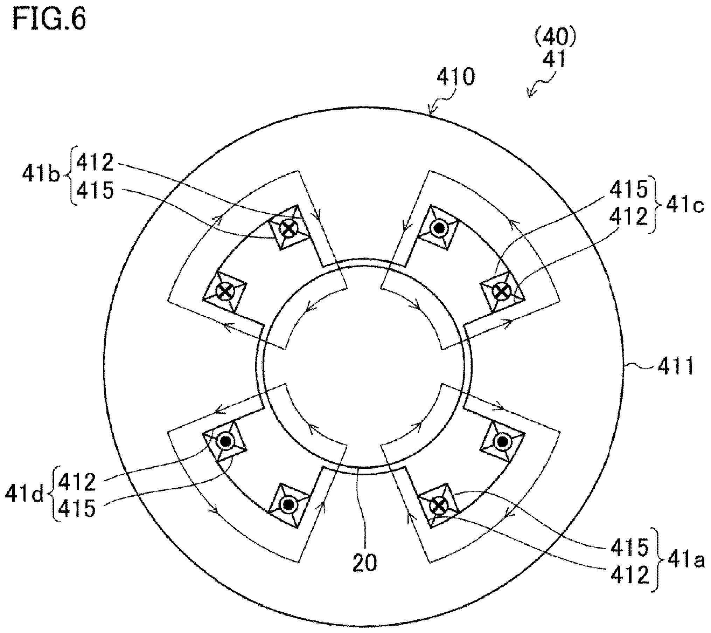

As illustrated in Fig. 6, in this example, the radial magnetic bearing (41) includes a first radial electromagnet (41a), a second radial electromagnet (41b), a third radial electromagnet (41c), and a fourth radial electromagnet (41d). The first radial electromagnet (41a) and the second radial electromagnet (41b) are disposed so as to face each other across the shaft (20). The third radial electromagnet (41c) and the fourth radial electromagnet (41d) are disposed so as to face each other across the shaft (20). The direction in which the third radial electromagnet (41c) and the fourth radial electromagnet (41d) face each other is orthogonal to the direction in which the first radial electromagnet (41a) and the second radial electromagnet (41b) face each other.

Specifically, the radial magnetic bearing (41) includes a core (410) and a plurality of windings (415). The core (410) is made of a magnetic material and has a cylindrical shape. The core (410) includes a cylindrical back yoke (411) and a plurality of teeth (412) provided along the inner circumferential surface of the back yoke (411). The plurality of windings (415) is each wound around corresponding one of the plurality of teeth (412). The windings (415) are wound around the teeth (412) to constitute radial electromagnets.

By energizing the windings (415) of the first to fourth radial electromagnets (41a) to (41d), an electromagnetic force is generated to support the shaft (20) in a non-contact manner in the radial direction of the radial magnetic bearing (41). By controlling the current flowing through the windings (415) of the first radial electromagnet (41a) and the second radial electromagnet (41b), the position of the shaft (20) in the direction in which the first radial electromagnet (41a) and the second radial electromagnet (41b) face is controlled. By controlling the current flowing through the windings (415) of the third radial electromagnet (41c) and the fourth radial electromagnet (41d), the position of the shaft (20) in the direction in which the third radial electromagnet (41c) and the fourth radial electromagnet (41d) face is controlled.

In this example, the radial magnetic bearing (41) is disposed so that the axis of the radial magnetic bearing (41) aligns with the axis of the stator (32) of the bearingless motor (30).

### <Thrust Magnetic Bearing>

The thrust magnetic bearing (42) controls the axial position of the shaft (20) in a non-contact manner using an electromagnetic force. As illustrated in Fig. 2, in this example, the thrust magnetic bearing (42) includes a first thrust electromagnet (42a) and a second thrust electromagnet (42b). The first thrust electromagnet (42a) and the second thrust electromagnet (42b) are disposed so as to face each other across the disc portion (21) of the shaft (20).

Specifically, the first thrust electromagnet (42a) includes an annular core and a winding wound in a ring shape. For example, the core of the first thrust electromagnet (42a) has an annular groove, and the coil of the first thrust electromagnet (42a) is housed in the groove of the core of the first thrust electromagnet (42a). The configuration of the second thrust electromagnet (42b) is similar to the configuration of the first thrust electromagnet (42a).

By energizing the windings of the first thrust electromagnet (42a) and the second thrust electromagnet (42b), an electromagnetic force is generated to support the shaft (20) in a non-contact manner in the axial direction of the thrust magnetic bearing (42). By controlling the current flowing through the windings of the first thrust electromagnet (42a) and the second thrust electromagnet (42b), the position of the shaft (20) in the direction in which the first thrust electromagnet (42a) and the second thrust electromagnet (42b) face is controlled.

### [Reference Position of Shaft]

For example, the position of the support unit (11) is controlled so that the shaft (20) is located at a predetermined reference position during the operation of the turbo compressor (1). In this example, the reference position is the position of the shaft (20) when the axis of rotation of the shaft (20) is aligned with a predetermined reference axis and the axial position of the shaft (20) is at a predetermined position in the reference axial direction. The reference axis is the axis of the stator (32) of the bearingless motor (30). The position in the reference axial direction is the axial position of the shaft (20) when the disc portion (21) of the shaft (20) is at the center position between the first thrust electromagnet (42a) and the second thrust electromagnet (42b) of the thrust magnetic bearing (42).

### [Touchdown Bearing]

The touchdown bearing (50) comes into contact with the shaft (20) to rotatably support the shaft (20) when the shaft (20) is not supported by the support unit (11) in a non-contact manner. In this example, the touchdown bearing (50) includes a radial touchdown bearing (51) and a radial thrust touchdown bearing (52).

### <Radial Touchdown Bearing>

The radial touchdown bearing (51) is formed in an annular shape. The radial touchdown bearing (51) is configured such that the shaft (20) is inserted therethrough. In this example, the radial touchdown bearing (51) is disposed between one end of the shaft (20) (the end to which the impeller (3) is fixed) and the bearingless motor (30). Specifically, the radial touchdown bearing (51) is disposed on the wall (2a) of the casing (2).

The radial touchdown bearing (51) is disposed so that the axis of the radial touchdown bearing (51) is aligned with the reference axis (specifically, the axis of the stator (32) of the bearingless motor (30) and the axis of the radial magnetic bearing (41)). The inside diameter of the radial touchdown bearing (51) is smaller than the inside diameter of the radial magnetic bearing (41) (the diameter of an imaginary cylindrical surface that is in contact with the ends of the teeth (412)).

When the position of the shaft (20) is at the reference position, the gap between the radial thrust touchdown bearing (52) and the shaft (20) is smaller than "the gap between the radial magnetic bearing (41) and the shaft (20)" and "the gap between the rotor (31) and the stator (32) of the bearingless motor (30)".

In this example, the inner circumferential surface of the radial touchdown bearing (51) comes into contact with the shaft (20), which moves in the radial direction of the radial touchdown bearing (51), to rotatably support the shaft (20). The contact between the shaft (20) and the inner circumferential surface of the radial touchdown bearing (51) can prevent "the contact between the rotor (31) and the stator (32) of the bearingless motor (30)" and "the contact between the shaft (20) and the radial magnetic bearing (41)".

### <Radial Thrust Touchdown Bearing>

The radial thrust touchdown bearing (52) is formed in an annular shape. The radial thrust touchdown bearing (52) is configured such that the shaft (20) is passed therethrough. In this example, the radial thrust touchdown bearing (52) is disposed between the measurement portion (25) of the shaft (20) and the thrust magnetic bearing (42). Specifically, the radial thrust touchdown bearing (52) is disposed so as to face the recessed portion (22) of the shaft (20).

The radial thrust touchdown bearing (52) is disposed such that the axis of the radial thrust touchdown bearing (52) is aligned with the reference axis (specifically, the axis of the stator (32) of bearingless motor (30) and the axis of the radial magnetic bearing (41)).

In this example, the radial thrust touchdown bearing (52) faces the recessed portion (22) of the shaft (20). Specifically, the inner circumferential surface of the radial thrust touchdown bearing (52) faces the bottom surface of the recessed portion (22) of the shaft (20), and axial both end faces of the radial thrust touchdown bearing (52) face both sides of the recessed portion (22) of the shaft (20).

When the shaft (20) is located at the reference position, the gap between the radial thrust touchdown bearing (52) and the bottom surface of the recessed portion (22) of the shaft (20) is smaller than each of "the gap between the radial magnetic bearing (41) and the shaft (20)" and "the gap between the rotor (31) and the stator (32) of the bearingless motor (30)".

When the shaft (20) is at the reference position, the gap between the radial thrust touchdown bearing (52) and one side of the recessed portion (22) of the shaft (20) is smaller than the gap between the first thrust electromagnet (42a) of the thrust magnetic bearing (42) and the disc portion (21) of the shaft (20). The gap between the radial thrust touchdown bearing (52) and the other side of the recessed portion (22) of the shaft (20) is smaller than the gap between the second thrust electromagnet (42b) of the thrust magnetic bearing (42) and the disc portion (21) of the shaft (20).

In this example, the radial thrust touchdown bearing (52) rotatably supports the shaft (20) such that the inner circumferential surface of the radial thrust touchdown bearing (52) comes into contact with the bottom surface of the recessed portion (22) of the shaft (20), which moves in the radial direction of the radial thrust touchdown bearing (52). The contact between the bottom surface of the recessed portion (22) of the shaft (20) and the inner circumferential surface of the radial thrust touchdown bearing (52) can prevent "the contact between the rotor (31) and the stator (32) of the bearingless motor (30)" and "the contact between the shaft (20) and the radial magnetic bearing (41)".

In this example, the radial thrust touchdown bearing (52) rotatably supports the shaft (20) such that the axial end face of the radial thrust touchdown bearing (52) comes into contact with the side surface of the recessed portion (22) of the shaft (20), which moves in the axial direction of the radial thrust touchdown bearing (52). The contact between the side surface of the recessed portion (22) of the shaft (20) and the radial thrust touchdown bearing (52) can prevent the contact between the disc portion (21) of the shaft (20) and the thrust magnetic bearing (42).

### [Various Sensors]

The drive system (10) includes the rotational angle sensor (60), the rotation reference sensor (65), a position sensor (70), a current sensor (not shown), and other various sensors. The rotational angle sensor (60) is one example of a rotational angle detector. The rotation reference sensor (65) is one example of a rotation reference detector.

Only one rotational angle sensor (60) is provided in the drive system (10). The drive system (10) includes a single rotational angle sensor (60). Similarly, only one rotation reference sensor (65) is provided in the drive system (10). The drive system (10) includes a single rotation reference sensor (65).

### [Rotational Angle Sensor]

The rotational angle sensor (60) is provided to detect the rotational angle of the shaft (20). The rotational angle sensor (60) outputs a signal corresponding to the rotational angle of the measurement portion (25) of the shaft (20). The signal output from the rotational angle sensor (60) has an amplitude that varies in accordance with a change in the rotational angle of the shaft (20). The signal output from the rotational angle sensor (60) is hereinafter referred to as "first signal (S1)".

In this example, the rotational angle sensor (60) is a gap sensor that outputs a signal corresponding to the distance from the measurement portion (25). The longer the distance between the gap sensor and the measurement portion (25) to be measured, the higher the level (amplitude) of the signal output from the gap sensor. For example, this gap sensor is an eddy current gap sensor.

Specifically, the rotational angle sensor (60) is disposed so as to face the first shaft portion (a shaft portion provided with the first stepped portions (201)) of the measurement portion (25) of the shaft (20) and outputs a signal corresponding to the distance from the first shaft portion of the measurement portion (25) of the shaft (20). As illustrated in Fig. 3, when the shaft (20) is at the reference position, the distance (D11) between the first stepped portions (201) of the first shaft portion and the rotational angle sensor (60) is longer than the distance (D10) between the remaining portion of the first shaft portion excluding the first stepped portions (201) and the rotational angle sensor (60). Accordingly, the level (amplitude) of the signal output from the rotational angle sensor (60) rises when the rotational angle sensor (60) and the first stepped portions (201) face each other.

### [Rotation Reference Sensor]

The rotation reference sensor (65) is provided to detect the position of the rotation reference of the shaft (20). The rotation reference sensor (65) outputs a signal corresponding to the reference rotational position of the measurement portion (25) of the shaft (20). The signal output from the rotation reference sensor (65) has an amplitude that varies in accordance with a change in the position of the rotation reference of the shaft (20). The signal output from the rotation reference sensor (65) is hereinafter referred to as "a first rotation reference signal (SS1)".

In this example, the rotation reference sensor (65) is a gap sensor that outputs a signal corresponding to the distance from the measurement portion (25). The longer the distance between the gap sensor and the measurement portion (25) to be measured, the higher the level (amplitude) of the signal output from the gap sensor. For example, this gap sensor is an eddy current gap sensor.

The rotation reference sensor (65) is disposed so as to face the second shaft portion (the shaft portion provided with the second stepped portion (202)) of the measurement portion (25) of the shaft (20) and outputs a signal corresponding to the distance from the second shaft portion of the measurement portion (25) of the shaft (20). As illustrated in Fig. 4, when the shaft (20) is located at the reference position, the distance (D21) between the second stepped portion (202) of the second shaft portion and the rotation reference sensor (65) is longer than the distance (D20) between the remaining portion of the second shaft portion excluding the second stepped portion (202) and the rotation reference sensor (65). Accordingly, the level (amplitude) of the signal output from the rotation reference sensor (65) rises when the rotation reference sensor (65) and the second stepped portion (202) face each other.

In this example, the rotational angle sensor (60) and the rotation reference sensor (65) are disposed vertically below the shaft (20). The rotational angle sensor (60) and the rotation reference sensor (65) are disposed so as to face the reference axis.

### [Position Sensor]

The position sensor (70) outputs a signal corresponding to the position of the shaft (20). In this example, the position sensor (70) is a gap sensor that outputs a signal corresponding to the distance from the shaft (20).

Specifically, in this example, the position sensor (70) includes a radial position sensor (71) and a thrust position sensor (72). Each of the radial position sensor (71) and the thrust position sensor (72) is a gap sensor that outputs a signal corresponding to the distance from the object to be measured. The longer the distance between the gap sensor and the object to be measured, the higher the level (amplitude) of the signal output from the gap sensor.

The radial position sensor (71) outputs a signal corresponding to the radial position of the shaft (20). In this example, the radial position sensor (71) is disposed so as to face, of the measurement portion (25) of the shaft (20), "a shaft portion including neither the first stepped portions (201) nor the second stepped portion (202) (hereinafter referred to as "cylindrical surface portion")" and outputs a signal corresponding to the distance from the cylindrical surface portion of the measurement portion (25) of the shaft (20).

The radial position sensor (71) includes two types of radial position sensors (a first radial position sensor (71) and a second radial position sensor (71)). The first radial position sensor (71) outputs a signal corresponding to the position of the shaft (20) in the direction in which the first radial electromagnet (41a) and the second radial electromagnet (41b) of the radial magnetic bearing (41) face each other. The second radial position sensor (71) outputs a signal corresponding to the position of the shaft (20) in the direction in which the third radial electromagnet (41c) and the fourth radial electromagnet (41d) of the radial magnetic bearing (41) face each other. The radial position sensor (71) is disposed so as to face the reference axis.

The thrust position sensor (72) outputs a signal corresponding to the axial position of the shaft (20). In this example, the thrust position sensor (72) is disposed so as to face the other end face of the shaft (20) and outputs a signal corresponding to the distance from the other end face of the shaft (20).

### [Shaft Runout Component]

The first signal (S1), which is the output of the rotational angle sensor (60), may have a shaft runout component (CX) superimposed thereon. The shaft runout component (CX) is a frequency component corresponding to the runout from the reference position of the shaft (20) supported in a non-contact manner. For example, when a runout of the shaft (20) occurs in the sensing direction of the rotational angle sensor (60) (the lateral direction in the example of Fig. 3), the amplitude of the first signal (S1) varies in accordance with the runout of the shaft (20). The shaft runout component (CX) is one example of a specific frequency component.

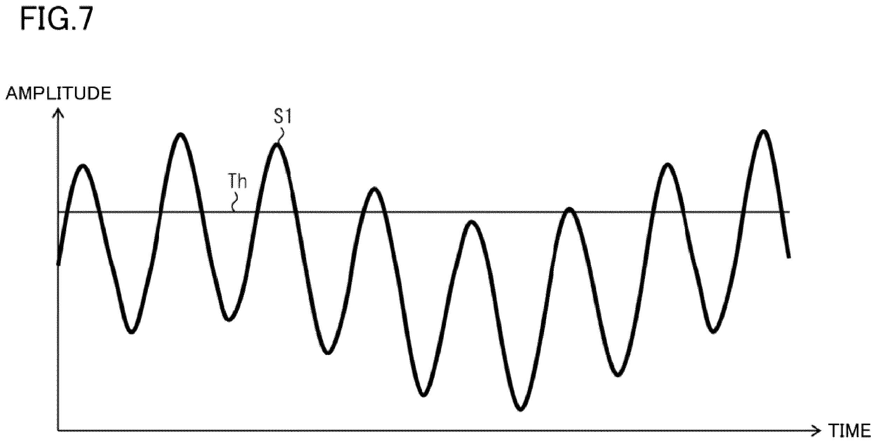

As illustrated in Fig. 7, when the amplitude of the first signal (S1) varies in accordance with the runout of the shaft (20), the amplitude of the first signal (S1) does not necessarily exceed a threshold Th during a period in which the amplitude of the first signal (S1) should exceed the threshold Th even if a change in the rotational angle of the shaft (20) is to be detected by comparing "the amplitude of the first signal (S1)" with "the threshold Th, which is a fixed value". This makes it difficult to accurately detect a change in the rotational angle of the shaft (20).

Such a runout of the shaft (20) occurs in accordance with disturbance, such as surging, generated in the refrigeration device (RR). In other words, the shaft runout component (CX) includes a shaft runout component (Cs) corresponding to disturbance such as surging. The shaft runout component (Cs) corresponding to surging is hereinafter simply referred to as "shaft runout component (Cs)".

Surging refers to a phenomenon in which the pressure and the flow rate of the fluid periodically vary throughout the entire flow path including the turbo compressor (1), due to a rapid change in the load on the turbo compressor (1). For example, when the load on the turbo compressor (1) in operation suddenly decreases from a high load to a low load, the flow rate of the fluid (specifically, a refrigerant) becomes unstable throughout the entire flow path including the turbo compressor (1) (specifically, the refrigerant circuit (RR1)), causing the turbo compressor (1) and pipes constituting the flow path to resonate, resulting in a periodic change in the pressure and the flow rate of the fluid throughout the entire flow path including the turbo compressor (1). Surging may occur when the motor provided in the turbo compressor (1) is rotating at a high speed (for example, 100 Hz).

In this example, the motor provided in the turbo compressor (1) is the bearingless motor (30). The motor provided in the turbo compressor (1) is hereinafter simply referred to as "motor".

The runout of the shaft (20) from the reference position includes the runout of the shaft (20) that occurs periodically in accordance with the rotational frequency of the motor. For example, the runout of the shaft (20) occurs at a frequency that is an integer multiple of the rotational frequency of the motor. In other words, the shaft runout component (CX) includes a shaft runout component (Cr) corresponding to the rotational frequency of the motor. The shaft runout component (Cr) corresponding to the rotational frequency of the motor is hereinafter simply referred to as "shaft runout component (Cr)".

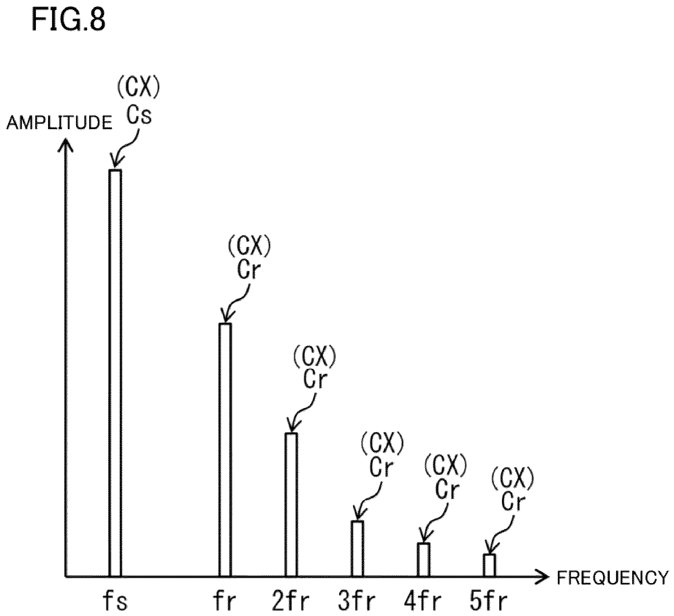

Referring next to Fig. 8, the shaft runout component (Cs) and the shaft runout component (Cr) will be described. Fig. 8 illustrates five shaft runout components (Cr) (first to fifth shaft runout components (Cr)). The frequencies of the first to fifth shaft runout components (Cr) gradually increase from the first to the fifth. The frequency of the k-th shaft runout component (Cr) is a frequency that is k times a rotational frequency (fr) of the motor, where k is an integer. For example, the frequency of the second shaft runout component (Cr) is a frequency 2fr that is twice the rotational frequency (fr) of the motor.

As illustrated in Fig. 8, the amplitude of the shaft runout component (Cs) tends to be larger than that of the shaft runout component (Cr). In the example of Fig. 8, the amplitude of the shaft runout component (Cs) is larger than that of the first shaft runout component (Cr). The amplitudes of the first to fifth shaft runout components (Cr) tend to gradually decrease from the first to the fifth. The shaft runout component (Cs) has the largest amplitude among the plurality of shaft runout components (CX).

As illustrated in Fig. 8, a frequency (fs) of the shaft runout component (Cs) tends to be lower than those of the shaft runout components (Cr). In the example of Fig. 8, the frequency (fs) of the shaft runout component (Cs) is lower than the frequency (fr) of the first shaft runout component (Cr). The shaft runout component (Cs) has the lowest frequency among the plurality of shaft runout components (CX). For example, the frequency (fs) of the shaft runout component (Cs) is approximately several hertz to several tens of hertz. The frequency of the first shaft runout component (Cr) when the motor is rotating at a high speed (a high speed at which surging may occur) is 100 Hz or higher.

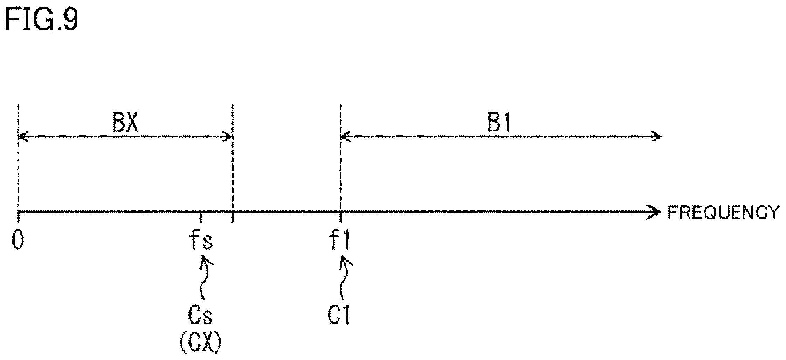

Referring next to Fig. 9, the relationship between the frequency (fs) of the shaft runout component (Cs) and a frequency (f1) of a first frequency component (C1) will be described. The first frequency component (C1) is a frequency component included in the first signal (S1) and corresponding to a change in the rotational angle of the shaft (20). In this example, the frequency (f1) of the first frequency component (C1) is obtained by multiplying "the rotational frequency of the motor" by "the number of first stepped portions (201) provided at the measurement portion (25) of the shaft (20)".

"The rotational frequency of the motor" corresponds to "the rotational frequency of the shaft (20) rotationally driven by the drive unit (12)". "The number of first stepped portions (201) provided at the measurement portion (25) of the shaft (20)" corresponds to "the shape of the measurement portion (25)". "The frequency (f1) of the first frequency component (C1)" corresponds to "the rotational frequency of the shaft (20) rotationally driven by the drive unit (12)" and "the shape of the measurement portion (25)".

In the example of Fig. 9, the lower limit of a fluctuation range (B1) of the frequency (f1) of the first frequency component (C1) is illustrated as "the frequency (f1) of the first frequency component (C1)". In other words, the frequency components having frequencies equal to or higher than the frequency (f1) of the first frequency component (C1) correspond to a change in the rotational angle of the shaft (20) and is usable to detect a change in the rotational angle of the shaft (20).

As illustrated in Fig. 9, the frequency (fs) of the shaft runout component (Cs) is lower than the frequency (f1) of the first frequency component (C1). For example, if the rotational frequency of the motor rotating at a high speed (a high speed at which surging may occur) is "100 Hz", and the number of first stepped portions (201) provided at the measurement portion (25) of the shaft (20) is "30", the frequency (f1) of the first frequency component (C1) is "3,000 Hz (= 100 Hz × 30)". The frequency (fs) of the shaft runout component (Cs) is approximately several hertz to several tens of hertz.

The frequency of the shaft runout component (Cs) mainly corresponds to the resonant frequency of the components constituting the flow path including the turbo compressor (1) (in this example, the turbo compressor (1), the radiator (RR5), the evaporator (RR7), pipes, and so on constituting the refrigerant circuit (RR1)). This resonant frequency depends on the structure, weight, density, volume, dimensions, and so on of the components constituting the flow path including the turbo compressor (1). If the refrigeration device (RR) is reduced in size or weight, the resonant frequency tends to increase, but the rotational frequency of the motor tends to increase to ensure sufficient motive power. Accordingly, the relationship "the frequency (fs) of the shaft runout component (Cs) is lower than the frequency (f1) of the first frequency component (C1)" is kept.

### [Signal Processing Unit]

The drive system (10) includes a signal processing unit (80). The signal processing unit (80) generates a second signal (S2) by performing a reduction process based on the first signal (S1) output from the rotational angle sensor (60). The reduction process is a process for reducing the shaft runout component (CX) included in the first signal (S1).

Specifically, the reduction process is a process for reducing frequency components within a shaft runout frequency band (BX) included in the first signal (S1). As illustrated in Fig. 9, the shaft runout frequency band (BX) includes the shaft runout component (CX) and has frequencies lower than the frequency (f1) of the first frequency component (C1). The shaft runout frequency band (BX) is one example of a specific frequency band including the frequency of the specific frequency component.

In this example, the shaft runout component (CX) reduced by the reduction process of the signal processing unit (80) is the shaft runout component (Cs). The reduction process performed by the signal processing unit (80) is a process for reducing at least the shaft runout component (Cs) of the plurality of shaft runout components (CX) that can be superimposed on the first signal (S1). As illustrated in Fig. 8, the shaft runout component (Cs) is a shaft runout component (CX) having the largest amplitude among the plurality of shaft runout components (CX). As illustrated in Fig. 9, the shaft runout frequency band (BX) includes the frequency (fs) of the shaft runout component (Cs). The upper limit of the shaft runout frequency band (BX) is preferably equal to or more than five times the upper limit of the frequency (fs) of the shaft runout component (Cs).

For example, if the rotational frequency of the motor rotating at a high speed (a high speed at which surging may occur) is "100 Hz", and the number of first stepped portions (201) provided at the measurement portion (25) of the shaft (20) is "30", the frequency (f1) of the first frequency component (C1), is "3,000 Hz (= 100 Hz × 30)". Since the frequency (fs) of the shaft runout component (Cs) is approximately several hertz to several tens of hertz, the shaft runout frequency band (BX) is equal to or less than "500 Hz".

### [Internal Configuration of Signal Processing Unit]

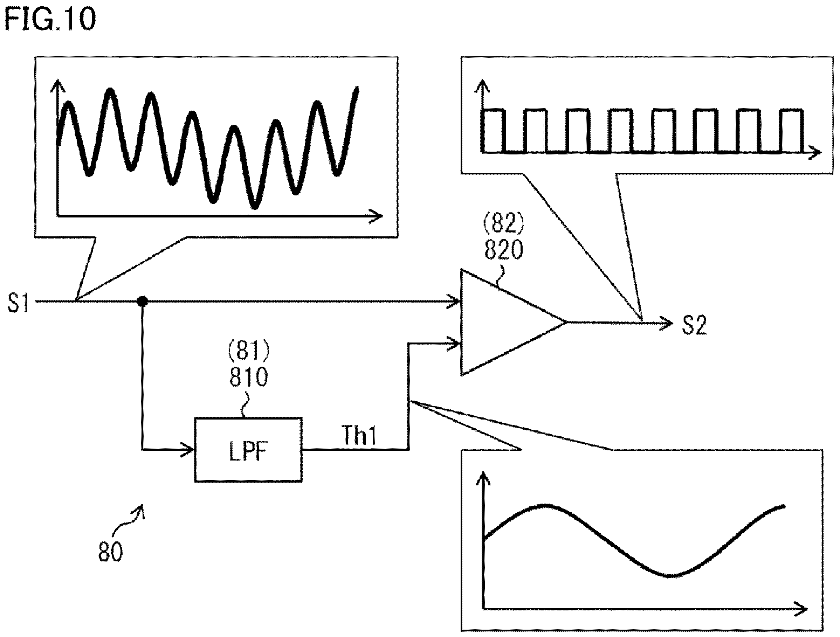

Referring next to Fig. 10, the configuration of the signal processing unit (80) will be described. The signal processing unit (80) includes a first processing unit (81) and a second processing unit (82).

The first processing unit (81) generates a threshold (Th1) corresponding to the shaft runout component (CX) based on the first signal (S1). In this example, the first processing unit (81) generates the threshold (Th1) by extracting frequency components within the shaft runout frequency band (BX) included in the first signal (S1).

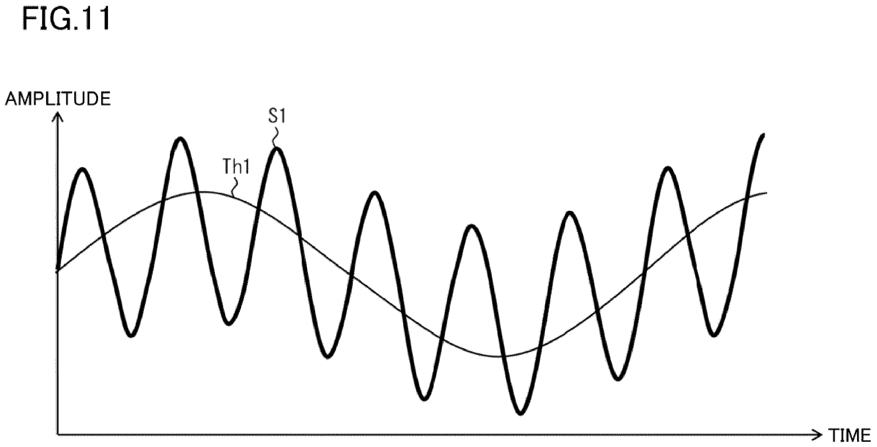

Specifically, the first processing unit (81) is constituted by a low-pass filter (810). The low-pass filter (810) allows frequency components within the shaft runout frequency band (BX) included in the first signal (S1) to pass therethrough and reduces frequency components within the other frequency bands excluding the shaft runout frequency band (BX) included in the first signal (S1). The first signal (S1) that has passed through the low-pass filter (810) is output as the threshold (Th1) corresponding to the shaft runout component (CX). As illustrated in Fig. 11, the threshold (Th1) changes at a frequency corresponding to the frequency of the shaft runout component (CX).

The second processing unit (82) generates the second signal (S2) by comparing the amplitude of the first signal (S1) with the threshold (Th1) generated by the first processing unit (81). Specifically, the second processing unit (82) is constituted by a comparator (820) that receives the first signal (S1) and the threshold (Th1). An output signal from the comparator (820) is output as the second signal (S2).

As illustrated in Fig. 11, the comparator (820) compares the first signal (S1) with the threshold (Th1). When the amplitude of the first signal (S1) exceeds the threshold (Th1), the comparator (820) causes the signal level of the second signal (S2) to transition from a low level to a high level, and when the amplitude of the first signal (S1) falls below the threshold (Th1), the comparator (820) causes the signal level of the second signal (S2) to transition from a high level to a low level. Thus, the second signal (S2) in which the shaft runout component (CX) is reduced is generated. In this example, the first signal (S1) is an analog signal, and the second signal (S2) is a pulsed signal (a rectangular wave signal).

### [Control Unit]

The drive system (10) includes a control unit (90). The control unit (90) is connected to various sensors provided in the drive system (10) via signal lines and receives signals output from the various sensors. The control unit (90) is connected to the components of the drive system (10) via signal lines to control the components of the drive system (10). In this example, the control unit (90) is connected to the bearingless motor (30), the radial magnetic bearing (41), the thrust magnetic bearing (42), the rotational angle sensor (60), the rotation reference sensor (65), the radial position sensor (71), and the thrust position sensor (72) via signal lines.

The control unit (90) receives various instructions such as a start instruction for starting the operation. The control unit (90) performs various processing operations based on the various instructions and signals output from the various sensors. In this example, the control unit (90) performs levitation position control, rotational drive control, and a rotational-angle detection process.

For example, the control unit (90) includes a processor, a memory that is electrically connected to the processor and stores programs for operating the processor, and a power supply unit that supplies power in response to an instruction from the processor.

### [Levitation Position Control]

The control unit (90) performs levitation position control when the shaft (20) is supported by the support unit (11) in a non-contact manner. In the levitation position control, the control unit (90) detects the position of the shaft (20) based on a signal output from the position sensor (70) and controls the support unit (11) so that the shaft (20) is located at the predetermined reference position.

Specifically, the control unit (90) detects the radial position of the shaft (20) (the position of the axis of rotation) based on a signal output from the radial position sensor (71) and controls the current flowing through the support windings (35) of the bearingless motor (30) and the current flowing through the windings (415) of the radial magnetic bearing (41) so that the radial position of the shaft (20) comes to a predetermined reference radial position (the position of the reference axis). The control unit (90) also detects the axial position of the shaft (20) based on a signal output from the thrust position sensor (72) and controls the current flowing through the windings of the thrust magnetic bearing (42) so that the axial position of the shaft (20) comes to a predetermined reference axial position.

### [Rotational Drive Control]

When the shaft (20) is supported by the support unit (11) in a non-contact manner, and the shaft (20) is rotationally driven by the drive unit (12), the control unit (90) performs rotational drive control. In the rotational drive control, the control unit (90) controls the drive unit (12) so that the rotational speed of the shaft (20) is kept at a target rotational speed.

Specifically, the control unit (90) detects the rotational speed of the shaft (20) based on the output from the various sensors provided in the drive system (10) and controls the current flowing through the drive windings (36) of the bearingless motor (30) so that the rotational speed comes to a target rotational speed of the shaft (20).

### [Rotational-Angle Detection Process]

The control unit (90) performs a rotational-angle detection process when the shaft (20) is rotationally driven by the drive unit (12). In the rotational-angle detection process, the control unit (90) detects the rotational angle of the shaft (20) based on the second signal (S2) generated by the signal processing unit (80). In the rotational-angle detection process, in this example, the control unit (90) detects the rotational angle of the shaft (20) based on the second signal (S2) generated by the signal processing unit (80) and the first rotation reference signal (SS1) output from the rotation reference sensor (65).

For example, the rotational-angle detection process is performed in parallel with levitation position control and rotational drive control. The rotational angle of the shaft (20) detected by the rotational-angle detection process is used in the levitation position control and the rotational drive control. The control unit (90) performs the levitation position control and the rotational drive control in accordance with rotational angle of the shaft (20) detected by the rotational-angle detection process.

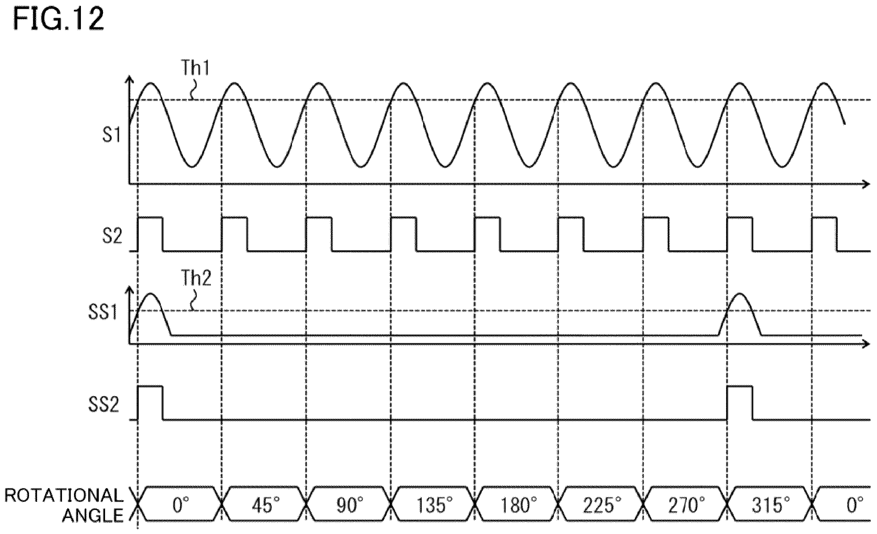

Referring next to Fig. 12, the rotational-angle detection process will be described in detail. Fig. 12 illustrates an example in which the shaft runout component (CX) is not superimposed on the first signal (S1) and the threshold (Th1) is constant for simplification of the illustration.

As illustrated in Fig. 12, the signal processing unit (80) compares the level (amplitude) of the first signal (S1) with the threshold (Th1) and generates the second signal (S2) according to the result of comparison. When the level of the first signal (S1) exceeds the threshold (Th1), the signal processing unit (80) causes the level of the second signal (S2) to transition from a low level to a high level, and when the level of the first signal (S1) falls below the threshold (Th1), the signal processing unit (80) causes the level of the second signal (S2) to transition from a high level to a low level.

The threshold (Th1) is preferably set lower than the level of the first signal (S1) when the first stepped portions (201) of the first shaft portion of the measurement portion (25) of the shaft (20) face the rotational angle sensor (60) and set higher than the level of the first signal (S1) when the remaining portion of the first shaft portion of the measurement portion (25) of the shaft (20) excluding the first stepped portions (201) faces the rotational angle sensor (60).

The control unit (90) also compares the level (amplitude) of the first rotation reference signal (SS1) output from the rotation reference sensor (65) with a predetermined rotation reference threshold Th2 and generates a second rotation reference signal (SS2) based on the result of comparison. When the level of the first rotation reference signal (SS1) exceeds the rotation reference threshold Th2, the control unit (90) causes the level of the second rotation reference signal (SS2) to transition from a low level to a high level, and when the level of the first rotation reference signal (SS1) falls below the rotation reference threshold Th2, the control unit (90) causes the level of the second rotation reference signal (SS2) to transition from a high level to a low level. In this example, the first rotation reference signal (SS1) is an analog signal, and the second rotation reference signal (SS2) is a pulsed signal (a rectangular wave signal).

The rotation reference threshold Th2 is preferably set lower than the level of the first rotation reference signal (SS1) when the second stepped portion (202) of the second shaft portion of the measurement portion (25) of the shaft (20) faces the rotation reference sensor (65) and set higher than the level of the first rotation reference signal (SS1) when the remaining portion of the second shaft portion of the measurement portion (25) of the shaft (20) excluding the second stepped portion (202) faces the rotation reference sensor (65).

The control unit (90) detects the rotational angle of the shaft (20) based on "a change in the rotational angle of the shaft (20)" indicated by the second signal (S2) and "a change in the position of the rotation reference of the shaft (20)" indicated by the second rotation reference signal (SS2).

Specifically, when the level of the second rotation reference signal (SS2) transitions from a low level to a high level, the control unit (90) sets the rotational angle of the shaft (20) to "0°". The control unit (90) increases the rotational angle of the shaft (20) by a predetermined amount (in this example, 45°) every time the level of the second signal (S2) transitions from a low level to a high level. The rotational angle of the shaft (20) is detected in this way.

### [Beneficial Effects of Embodiment]

As described above, the drive system (10) according to the embodiment includes the single rotational angle sensor (60), the signal processing unit (80), and the control unit (90). The rotational angle sensor (60) outputs the first signal (S1) on which the shaft runout component (CX) (the specific frequency component) can be superimposed, the first signal (S1) having an amplitude that changes in accordance with a change in the rotational angle of the shaft (20). The shaft runout component (CX) is a frequency component corresponding to the runout from the reference position of the shaft (20) supported in a non-contact manner. The signal processing unit (80) generates, based on the first signal (S1) output from the rotational angle sensor (60), the second signal (S2) by performing a reduction process for reducing the shaft runout component (CX) (the specific frequency component) included in the first signal (S1). The control unit (90) controls the support unit (11) and the drive unit (12). The control unit (90) detects the rotational angle of the shaft (20) based on the second signal (S2) generated by the signal processing unit (80). The frequency of the shaft runout component (CX) (the specific frequency component) reduced by the reduction process is lower than the frequency of the first frequency component (C1) included in the first signal (S1), the first frequency component (C1) being an alternating-current frequency component other than a direct current component and corresponding to the change in the rotational angle of the shaft (20).

With the above configuration, only one rotational angle sensor (60) is needed to detect a change in the rotational angle of the shaft (20), thereby reducing the number of sensors for detecting a change in the rotational angle of the shaft (20).

The drive system (10) according to the embodiment can generate a signal, as the second signal (S2), in which the shaft runout component (CX) is reduced (a signal having an amplitude that changes in accordance with a change in the rotational angle of the shaft (20)) by performing a reduction process based on the first signal (S1) output from the rotational angle sensor (60). This allows for accurate detection of the rotational angle of the shaft (20) based on the second signal (S2).

The apparatus disclosed in PTL 1 includes two sensors (a rotation detector and a shaft runout detector) to detect a change in the rotational angle of the rotating member. Therefore, due to differences in mounting tolerances between the sensors or output characteristics resulting from individual variations, there is a possibility that shaft runout components cannot be accurately removed from the signal components of the rotation detection signal.

In contrast, the drive system (10) according to the embodiment only needs to include a single rotational angle sensor (60) to detect a change in the rotational angle of the shaft (20), thereby avoiding influences as in PTL 1 (influences due to differences in mounting tolerances between the sensors or output characteristics resulting from individual variations).

In the drive system (10) according to the embodiment, the shaft runout component (CX) (the specific frequency component) reduced by the reduction process includes a shaft runout component (CX) having the largest amplitude among a plurality of shaft runout components (CX) corresponding to the runout from the reference position of the shaft (20) supported in a non-contact manner. "A shaft runout component (CX) having the largest amplitude among a plurality of shaft runout components (CX)" is one example of "a frequency component having the largest amplitude among frequency components lower than the frequency of the first frequency component (C1)".

With the above configuration, "the shaft runout component (CX) having the largest amplitude" among the plurality of shaft runout components (CX) that can be superimposed on the first signal (S1) can be reduced by the reduction process. This allows the second signal (S2) to be accurately generated so that its amplitude varies in accordance with a change in the rotational angle of the shaft (20), thereby enabling accurate detection of the rotational angle of the shaft (20) based on the second signal (S2).

In the drive system (10) according to the embodiment, the frequency of the shaft runout component (CX) (the specific frequency component) reduced by the reduction process is lower than the frequency of the first frequency component (C1) included in the first signal (S1) and corresponding to a change in the rotational angle of the shaft (20).

With the above configuration, among the plurality of shaft runout components (CX) that can be superimposed on the first signal (S1), "a shaft runout component (CX) having a frequency lower than the frequency of the first frequency component (C1)" can be reduced by the reduction process. This can prevent frequency components having frequencies equal to or higher than that of the first frequency component (C1) (frequency components that may be used to detect a change in the rotational angle of the shaft (20)) from being reduced by the reduction process. As a result, the second signal (S2) can be accurately generated such that its amplitude varies in accordance with a change in the rotational angle of the shaft (20), thereby enabling accurate detection of the rotational angle of the shaft (20) based on the second signal (S2).

In the drive system (10) according to the embodiment, the reduction process is a process for reducing frequency components in the shaft runout frequency band (BX) (the specific frequency band) included in the first signal (S1). The shaft runout frequency band (BX) (the specific frequency band) includes the frequency of the shaft runout component (CX) (the specific frequency component) and has frequencies lower than the frequency of the first frequency component (C1).

The above configuration can prevent frequency components having frequencies equal to or higher than the frequency of the first frequency component (C1) (frequency components that may be used to detect a change in the rotational angle of the shaft (20)) from being reduced by the reduction process. This allows accurate detection of the second signal (S2) such that its amplitude varies in accordance with a change in the rotational angle of the shaft (20), thereby enabling accurate detection of the rotational angle of the shaft (20) based on the second signal (S2).

In the drive system (10) according to the embodiment, the shaft (20) includes the measurement portion (25). The rotational angle sensor (60) is a gap sensor configured to output a signal having an amplitude that changes in accordance with the distance from the measurement portion (25), and the measurement portion (25) is configured to change in distance from the rotational angle sensor (60) in accordance with a change in the rotational angle of the shaft (20). The first frequency component (C1) is a frequency corresponding to the rotational frequency of the shaft (20) that is rotationally driven by the drive unit (12) and the shape of the measurement portion (25).

With the above configuration, when the rotational angle of the shaft (20) varies, the distance between the measurement portion (25) of the shaft (20) and the rotational angle detector (60) changes, and as a result, the first signal (S1) output from the rotational angle detector (60) changes. This makes it possible to configure the first signal (S1) output from the rotational angle detector (60) as "a signal having an amplitude that changes in accordance with a change in the rotational angle of the shaft (20)".

In the drive system (10) according to the embodiment, the signal processing unit (80) includes the first processing unit (81) and the second processing unit (82). The first processing unit (81) generates, based on the first signal (S1), the threshold (Th1) corresponding to the shaft runout component (CX) (the specific frequency component). The second processing unit (82) generates the second signal (S2) by comparing the amplitude of the first signal (S1) and the threshold (Th1) generated by the first processing unit (81).

With the above configuration, by comparing the amplitude of the first signal (S1) and the threshold (Th1) corresponding to the shaft runout component (CX), "a signal in which the shaft runout component (CX) is reduced" acquired by the comparison can be used as the second signal (S2).

In the drive system (10) according to the embodiment, the first processing unit (81) generates the threshold (Th1) by extracting frequency components within the shaft runout frequency band (BX) (the specific frequency band) included in the first signal (S1).

With the above configuration, by extracting frequency components within the shaft runout frequency band (BX) from the first signal (S1), the extracted frequency components can be used as "the threshold (Th1) corresponding to the shaft runout component (CX)".

### (Modification 1 of Embodiment)

The drive system (10) according to Modification 1 of the embodiment differs from the drive system (10) according to the embodiment in the configuration of the signal processing unit (80), while the other configurations are the same as those of the drive system (10) according to the embodiment.

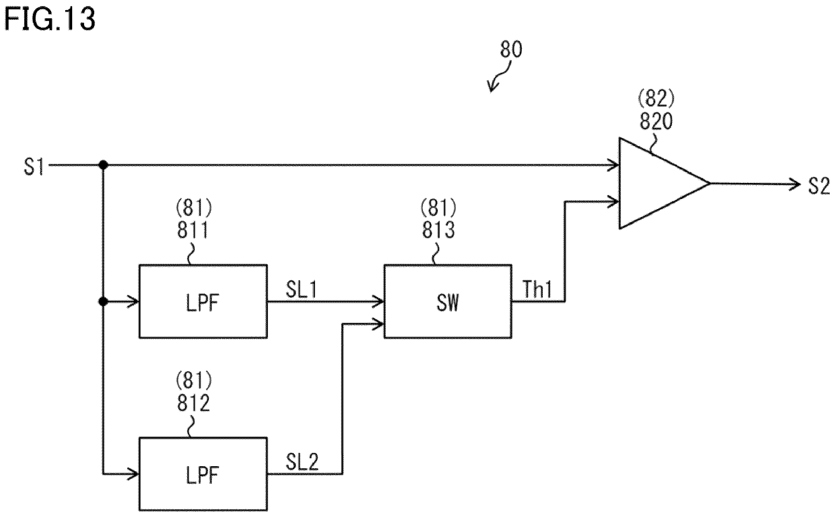

Fig. 13 illustrates the configuration of the signal processing unit (80) according to Modification 1 of the embodiment. In Modification 1 of the embodiment, the first processing unit (81) selectively performs a first extraction process and a second extraction process. The first extraction process generates the threshold (Th1) by extracting frequency components within the shaft runout frequency band (BX) (the specific frequency band) included in the first signal (S1). The second extraction process generates the threshold (Th1) by extracting direct current components from the first signal (S1).

As illustrated in Fig. 13, in Modification 1 of the embodiment, the first processing unit (81) includes a first low-pass filter (811), a second low-pass filter (812), and a switch (813).

The first low-pass filter (811) allows frequency components within the shaft runout frequency band (BX) included in the first signal (S1) to pass therethrough and reduces frequency components within the other frequency bands excluding the shaft runout frequency band (BX) included in the first signal (S1). A first low-pass signal (SL1), which is a first signal (S1) that has passed through the first low-pass filter (811), varies at a frequency corresponding to the frequency of the shaft runout component (CX). The processing by the first low-pass filter (811) corresponds to the first extraction process.

The second low-pass filter (812) allows direct current components included in the first signal (S1) to pass through and reduces the remaining frequency components included in the first signal (S1). A second low-pass signal (SL2), which is a first signal (S1) that has passed through the second low-pass filter (812), is a constant value (or a substantially constant value). The processing by the second low-pass filter (812) corresponds to the second extraction process.

For example, the cut-off frequency of the second low-pass filter (812) is lower than the cut-off frequency of the first low-pass filter (811). The second low-pass filter (812) extracts "frequency components within the frequency band of an upper limit frequency lower than the upper limit frequency of the shaft runout frequency band (BX) and including a direct current component" included in the first signal (S1).

The switch (813) selects one of "the first low-pass signal (SL1) output from the first low-pass filter (811)" and "the second low-pass signal (SL2) output from the second low-pass filter (812)", and supplies the selected signal as the threshold (Th1) to the second processing unit (82). The signal selection by the switch (813) may be controlled by the control unit (90).

The signal selection by the switch (813) is performed in accordance with the operating condition of the drive system (10), such as a rotational speed of a motor provided in the turbo compressor (1) (in this example, the bearingless motor (30)). Specifically, when the motor provided in the turbo compressor (1) rotates at a high speed (for example, the rotational frequency is higher than 100 Hz at which surging may occur), the switch (813) selects the first low-pass signal (SL1) as the threshold (Th1), and when the motor provided in the turbo compressor (1) rotates at a low speed (for example, the rotational frequency is equal to or lower than 100 Hz at which no surging may occur), the switch (813) selects the second low-pass signal (SL2) as the threshold (Th1).

Thus, the drive system (10) according to Modification 1 of the embodiment can appropriately change the threshold (Th1) in accordance with the operating condition of the drive system (10) (for example, the rotational speed of the motor provided in the turbo compressor (1)).

### (Modification 2 of Embodiment)

The drive system (10) according to Modification 2 of the embodiment differs from the drive system (10) according to the embodiment in the configuration of the signal processing unit (80), while the other configurations are the same as those of the drive system (10) according to the embodiment.

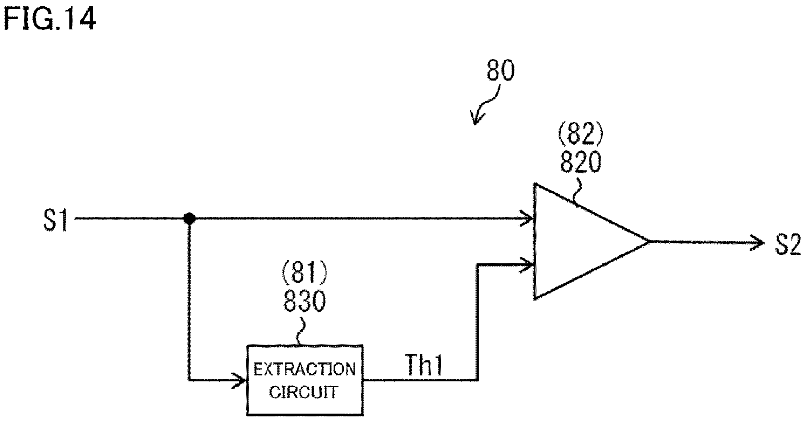

Fig. 14 illustrates the configuration of the signal processing unit (80) according to Modification 2 of the embodiment. In Modification 2 of the embodiment, the first processing unit (81) generates the threshold (Th1) by repeatedly performing the process of setting, as the threshold (Th1), a value derived based on the amplitude of the first signal (S1) during a predetermined period (specifically, the average value of the amplitude of the first signal (S1) during a predetermined period).

As illustrated in Fig. 14, in Modification 2 of the embodiment, the first processing unit (81) is an extraction circuit (830). The extraction circuit (830) derives, for each first period (T1), the average value of the first signal (S1) in a second period (T2) immediately preceding the first period (T1) and supplies the derived average value to the second processing unit (82) as the threshold (Th1).

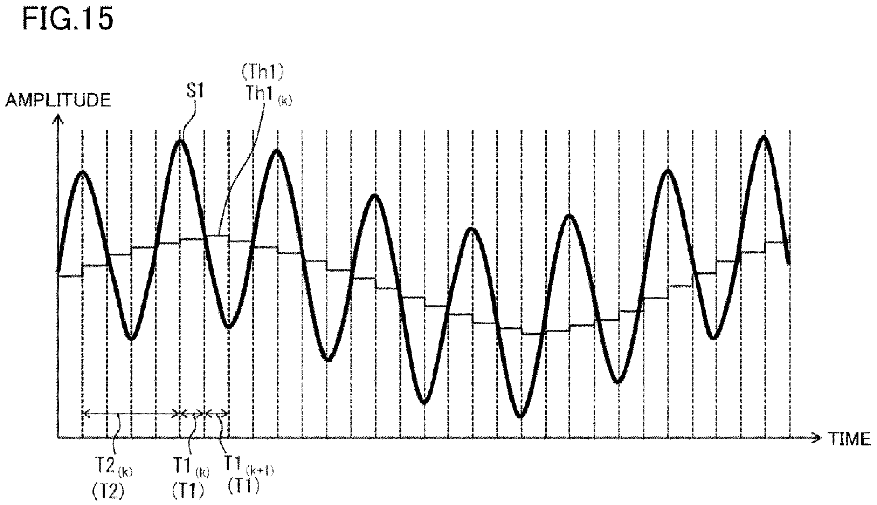

As illustrated in Fig. 15, the extraction circuit (830) derives, in the k-th first period (T1₍ₖ₎), the average value of the first signal (S1) in the k-th second period (T2₍ₖ₎) immediately preceding the first period (T1₍ₖ₎) and supplies the derived average value to the second processing unit (82) as the k-th threshold (Th1₍ₖ₎). The k-th threshold (Th1₍ₖ₎) is used in the (k + 1)-th first period (T1_{(k + 1)}) immediately after the k-th first period (Th1₍ₖ₎). By repeatedly performing such processing for each first period (T1), the threshold (Th1) changes at a frequency corresponding to the frequency of the shaft runout component (CX) (the specific frequency component).

For example, the time length of the first period (T1) is set to a time length corresponding to one fourth of the period of the first signal (S1), and the time length of the second period (T2) is set to a time length corresponding to one period of the first signal (S1).

Thus, the drive system (10) according to Modification 2 of the embodiment can change the threshold (Th1) in accordance with the shaft runout component (CX) by repeatedly performing "the process of setting, as the threshold (Th1), a value derived based on the amplitude of the first signal (S1) during a predetermined period". Thus, the threshold (Th1) corresponding to the shaft runout component (CX) can be generated.

### (Modification 3 of Embodiment)

The drive system (10) according to Modification 3 of the embodiment differs from the drive system (10) according to the embodiment in the configuration of the signal processing unit (80), while the other configurations are the same as those of the drive system (10) according to the embodiment.

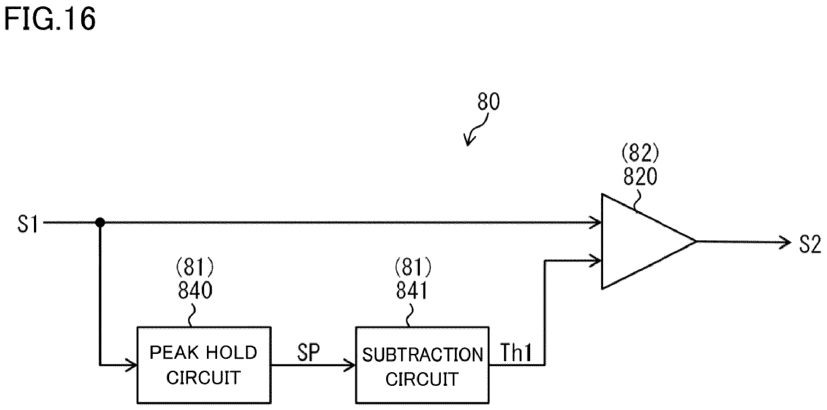

Fig. 16 illustrates the configuration of the signal processing unit (80) according to Modification 3 of the embodiment. In Modification 3 of the embodiment, the first processing unit (81) generates the threshold (Th1) by repeatedly performing the process of setting, as the threshold (Th1), a value derived based on the amplitude of the first signal (S1) during a predetermined period (specifically, the maximum value of the amplitude of the first signal (S1) in a predetermined period).

As illustrated in Fig. 16, in Modification 3 of the embodiment, the first processing unit (81) includes a peak hold circuit (840) and a subtraction circuit (841).

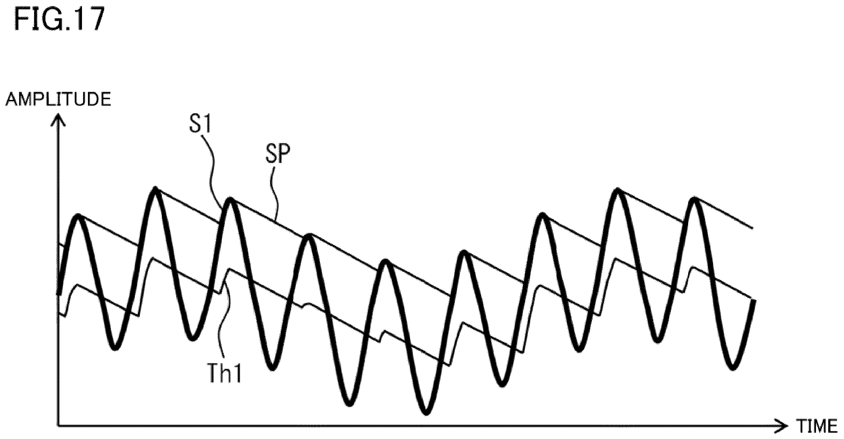

As illustrated in Fig. 17, the peak hold circuit (840) detects and holds "a peak value", which is the maximum value of the amplitude of the first signal (S1) that arrives at every predetermined period, and outputs a peak signal SP indicating the held peak value. The level (amplitude) of the peak signal SP corresponds to the peak value. The subtraction circuit (841) decreases the level of the peak signal SP output from the peak hold circuit (840) by a predetermined amount. For example, the predetermined amount is set to one half of the difference between the maximum value and the minimum value of the amplitude of the first signal (S1) in which the shaft runout component (CX) (the specific frequency component) is not superimposed. The output signal from the subtraction circuit (841) is supplied to the second processing unit (82) as the threshold (Th1). By repeatedly performing such processing every predetermined period, the threshold (Th1) changes at a frequency corresponding to the frequency of the shaft runout component (CX) (the specific frequency component).

Thus, in the drive system (10) according to Modification 3 of the embodiment, as in the drive system (10) according to Modification 2 of the embodiment, the threshold (Th1) can be changed in accordance with the shaft runout component (CX) by repeatedly performing "the process of setting, as the threshold (Th1), a value derived based on the amplitude of the first signal (S1) in a predetermined period". Thus, the threshold (Th1) corresponding to the shaft runout component (CX) can be generated.

### (Modification 4 of Embodiment)

The drive system (10) according to Modification 4 of the embodiment differs from the drive system (10) according to the embodiment in the configuration of the signal processing unit (80), while the other configurations are the same as those of the drive system (10) according to the embodiment.

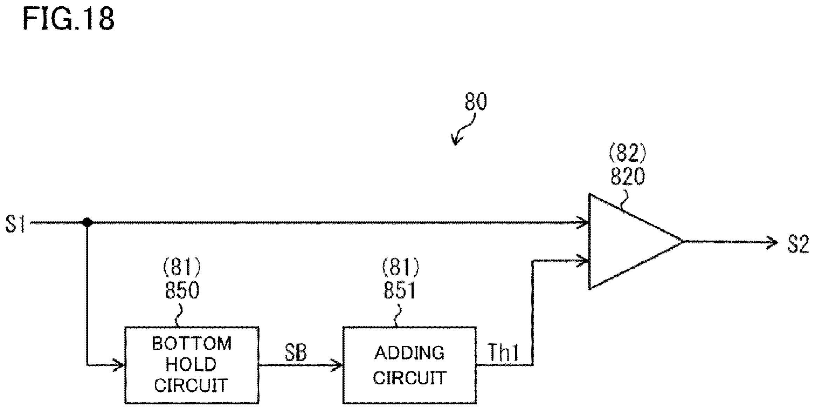

Fig. 18 illustrates the configuration of the signal processing unit (80) according to Modification 4 of the embodiment. In Modification 4 of the embodiment, the first processing unit (81) generates the threshold (Th1) by repeatedly performing the process of setting, as the threshold (Th1), a value derived based on the amplitude of the first signal (S1) during a predetermined period (specifically, the minimum value of the amplitude of the first signal (S1) in a predetermined period).

As illustrated in Fig. 18, in Modification 4 of the embodiment, the first processing unit (81) includes a bottom hold circuit (850) and an adding circuit (851).

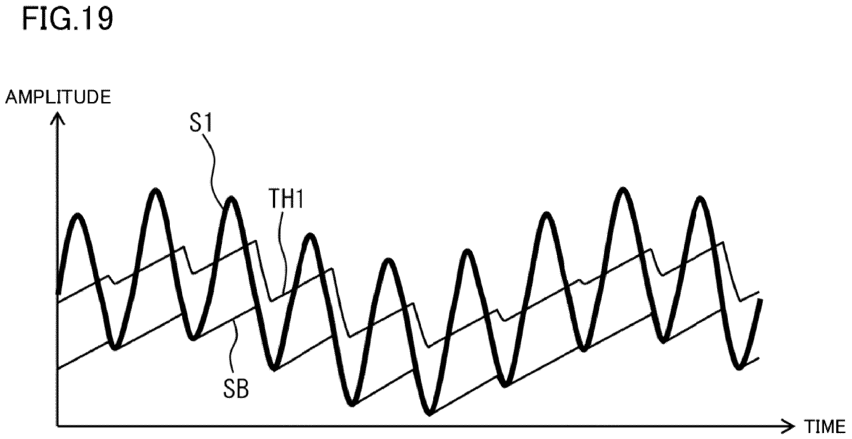

As illustrated in Fig. 19, the bottom hold circuit (850) detects and holds "a bottom value", which is the minimum value of the amplitude of the first signal (S1) that arrives at every predetermined period and outputs a bottom signal SB indicating the held bottom value. The level (amplitude) of the bottom signal SB corresponds to the bottom value. The adding circuit (851) increases the level of the bottom signal SB output from the bottom hold circuit (850) by a predetermined amount. For example, the predetermined amount is set to one half of the difference between the maximum value and the minimum value of the amplitude of the first signal (S1) in which the shaft runout component (CX) (the specific frequency component) is not superimposed. The output signal from the adding circuit (851) is supplied to the second processing unit (82) as the threshold (Th1). By repeatedly performing such processing every predetermined period, the threshold (Th1) changes at a frequency corresponding to the frequency of the shaft runout component (CX) (the specific frequency component).

Thus, in the drive system (10) according to Modification 4 of the embodiment, as in the drive system (10) according to Modification 2 of the embodiment, the threshold (Th1) can be changed in accordance with the shaft runout component (CX) by repeatedly performing "the process of setting, as the threshold (Th1), a value derived based on the amplitude of the first signal (S1) in a predetermined period". Thus, the threshold (Th1) corresponding to the shaft runout component (CX) can be generated.

### (Modification 5 of Embodiment)

The drive system (10) according to Modification 5 of the embodiment differs from the drive system (10) according to the embodiment in the configuration of the signal processing unit (80), while the other configurations are the same as those of the drive system (10) according to the embodiment.

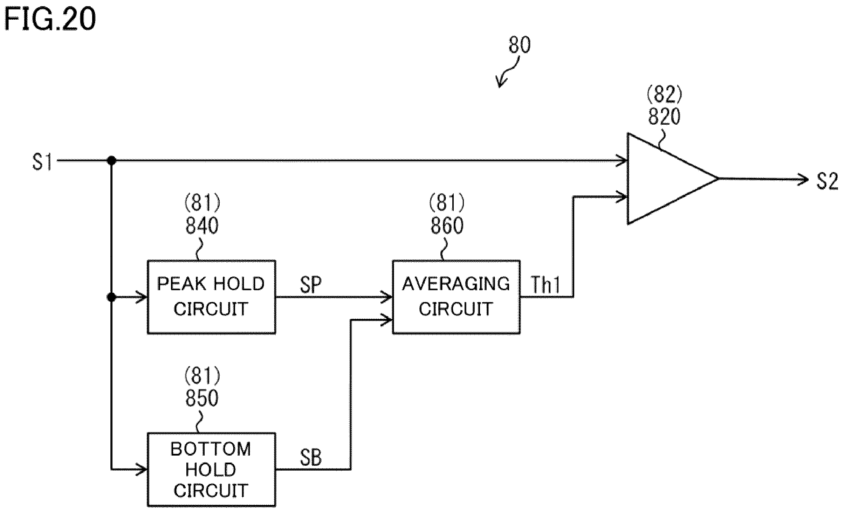

Fig. 20 illustrates the configuration of the signal processing unit (80) according to Modification 5 of the embodiment. In Modification 5 of the embodiment, the first processing unit (81) generates the threshold (Th1) by repeatedly performing the process of setting, as the threshold (Th1), a value derived based on the amplitude of the first signal (S1) during a predetermined period (specifically, the maximum value and the minimum value of the amplitude of the first signal (S1) in a predetermined period).

As illustrated in Fig. 20, in Modification 5 of the embodiment, the first processing unit (81) includes a peak hold circuit (840), a bottom hold circuit (850), and an averaging circuit (860).

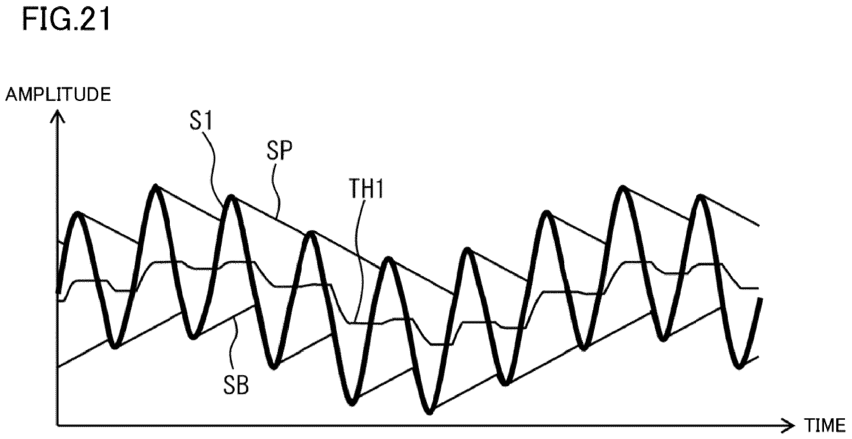

As illustrated in Fig. 21, the averaging circuit (860) derives the average value of "the level of the peak signal SP output from the peak hold circuit (840)" and "the level of the bottom signal SB output from the bottom hold circuit (850)" and supplies the derived average value to the second processing unit (82) as the threshold (Th1). By repeatedly performing such processing every predetermined period, the threshold (Th1) changes at a frequency corresponding to the frequency of the shaft runout component (CX) (the specific frequency component).

Thus, in the drive system (10) according to Modification 5 of the embodiment, as in the drive system (10) according to Modification 2 of the embodiment, the threshold (Th1) can be changed in accordance with the shaft runout component (CX) by repeatedly performing "the process of setting, as the threshold (Th1), a value derived based on the amplitude of the first signal (S1) in a predetermined period". Thus, the threshold (Th1) corresponding to the shaft runout component (CX) can be generated.

### (Modification 6 of Embodiment)

The drive system (10) according to Modification 6 of the embodiment differs from the drive system (10) according to the embodiment in the configuration of the signal processing unit (80), while the other configurations are the same as those of the drive system (10) according to the embodiment.

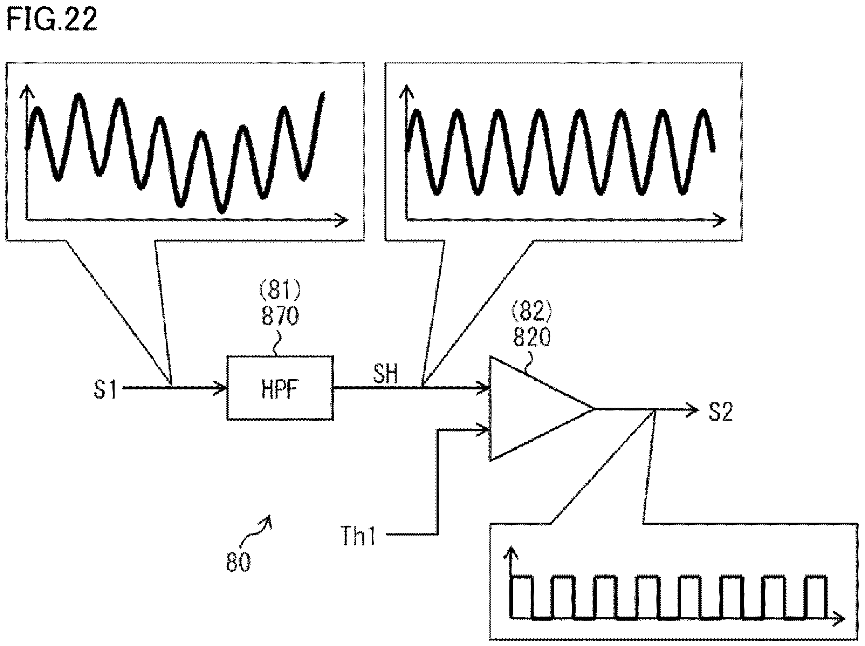

Fig. 22 illustrates the configuration of the signal processing unit (80) according to Modification 6 of the embodiment. In Modification 6 of the embodiment, the first processing unit (81) reduces the shaft runout component (CX) (the specific frequency component) included in the first signal (S1). The second processing unit (82) generates the second signal (S2) by comparing a signal acquired by the first processing unit (81) and the threshold (Th1).

As illustrated in Fig. 22, in Modification 6 of the embodiment, the first processing unit (81) is a high-pass filter (870). The second processing unit (82) is a comparator (820). The high-pass filter (870) reduces frequency components within the shaft runout frequency band (BX) (the specific frequency band) included in the first signal (S1) and allows frequency components within other frequency bands included in the first signal (S1) excluding the shaft runout frequency band (BX) to pass therethrough. A high-pass signal SH, which is the first signal (S1) that has passed through the high-pass filter (870), is supplied to the second processing unit (82).

In Modification 6 of the embodiment, the second processing unit (82) is a comparator (820) that receives the high-pass signal SH and the threshold (Th1). The output signal from the comparator (820) is output as the second signal (S2). The threshold (Th1) is a constant value (a fixed value).

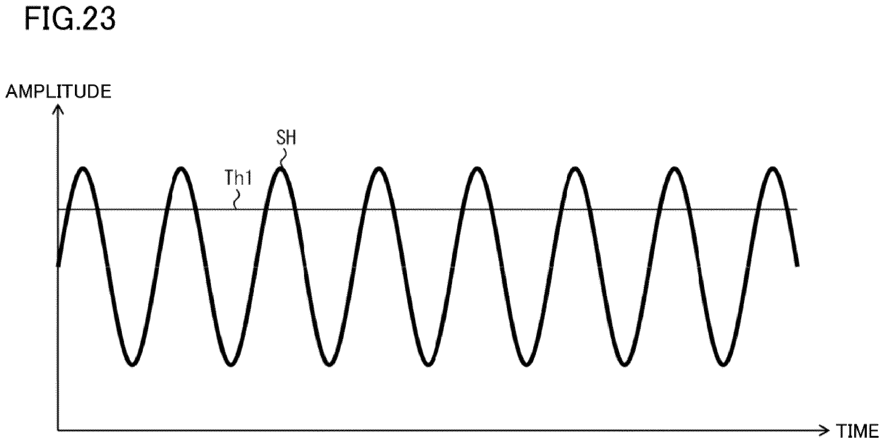

As illustrated in Fig. 23, the comparator (820) compares the high-pass signal SH with the threshold (Th1). When the amplitude of the high-pass signal SH exceeds the threshold (Th1), the comparator (820) causes the signal level of the second signal (S2) to transition from a low level to a high level, and when the amplitude of the high-pass signal SH falls below the threshold (Th1), the comparator (820) causes the signal level of the second signal (S2) to transition from a high level to a low level. Thus, the second signal (S2) in which the shaft runout component (CX) (the specific frequency component) is reduced is generated. In this example, the high-pass signal SH is an analog signal, and the second signal (S2) is a pulsed signal (a rectangular wave signal).

Thus, in the drive system (10) according to Modification 6 of the embodiment, by comparing the amplitude of the first signal (S1) in which the shaft runout component (CX) is reduced with the threshold (Th1), "a signal in which the shaft runout component (CX) is reduced" acquired by the comparison can be used as the second signal (S2).

### (Other Embodiments)

In the above description, an example has been given in which the drive system (10) includes the bearingless motor (30) and the magnetic bearing (40) (specifically, the radial magnetic bearing (41) and the thrust magnetic bearing (42)); however, this is merely one example.

For example, the drive system (10) may include one more bearingless motor (30) in place of the radial magnetic bearing (41). The support windings (35) of the bearingless motor (30) function as the support unit (11). The drive windings (36) of the bearingless motor (30) function as the drive unit (12).

Alternatively, the drive system (10) may include one more radial magnetic bearing (41) and a motor only for use in rotationally driving the shaft (20) in place of the bearingless motor (30). This radial magnetic bearing (41) functions as the support unit (11). This motor functions as the drive unit (12).

Although the above description has exemplified a case where the first stepped portions (201) are recessed portions, this is merely one example. For example, the first stepped portions (201) may be protrusions. The same applies to the second stepped portion (202).

Although the above description has exemplified a case where the gap sensor is an eddy current gap sensor, this is merely one example. For example, the gap sensor may be a gap sensor of another type, such as an ultrasonic type or an optical type. If the measurement portion (25) of the shaft (20) contains a magnetic material, the rotational angle sensor (60) may be a magnetic sensor, such as a hall sensor or a magnetoresistive (MR) sensor.

Although the description of the embodiment has exemplified a case where "a first shaft portion provided with a plurality of first stepped portions (201)" and "a second shaft portion provided with a second stepped portion (202)" are next to each other in the axial direction of the shaft (20), this is merely one example. For example, the second shaft portion may be disposed at a position separate from the first shaft portion.

In the above description, the thrust magnetic bearing (42) may be divided into a front thrust magnetic bearing and a rear thrust magnetic bearing. In this case, the front thrust magnetic bearing is disposed on the front (impeller) side of the shaft (20) in the axial direction, while the rear thrust magnetic bearing is disposed on the rear side, opposite to the impeller side, in the axial direction.

In the above description, in the case of a sensorless system (a system that detects the position of the shaft (20) without using the position sensor (70)), the position sensor (70) may be omitted.

Although the above description has exemplified a case where the impeller (3) is disposed at the front end of the shaft (20) in the axial direction, and the radial touchdown bearing (51), the bearingless motor (30), the radial magnetic bearing (41), the radial thrust touchdown bearing (52), and the thrust magnetic bearing (42) are disposed in this order from the impeller (3) toward the rear side in the axial direction, this is merely one example. For example, the thrust magnetic bearing (42) may be disposed on the impeller (front) side in the axial direction. The other components may also be disposed at any positions.

In the above description, the impeller (3) is not limited to one and may be two or more. The mounting position of the impeller (3) is not limited to the front end of the shaft (20) and may be the rear end of the shaft (20) or other than the ends of the shaft (20). For example, two impellers 3 may be continuously mounted at the front end of the shaft (20), or two impellers 3 may be mounted at the front end and the rear end of the shaft (20).

In the above description, two or more bearingless motors (30) may be provided for the shaft (20). The low-pass filter and the high-pass filter may be band pass filters or notch filters.

Although the above description has exemplified a case where the specific frequency component is the shaft runout component (CX), this is merely one example. Other examples of the specific frequency component include a frequency component corresponding to noise that is generated in the output from the rotational angle sensor (60) (for example, a gap sensor) due to a change in a magnetic field or an electric field outside the rotational angle sensor (60) and a frequency component corresponding to noise that is generated in the output from the rotational angle sensor (60) due to noise generated by an inverter (not shown) that drives the support unit (11) and the drive unit (12) (for example, common mode noise). The inverter is included in the power supply unit constituting part of the control unit (90).

In the above description, the signal processing unit (80) may be a dedicated circuit. Alternatively, the signal processing unit (80) may, like the control unit (90), be configured by a processor and a memory that is electrically connected to the processor and stores programs for operating the processor. For example, the signal processing unit (80) may be included in the control unit (90). In other words, the signal processing unit (80) may be implemented as part of the functions of the control unit (90).

Having described the embodiment and modifications, it is to be understood that various modifications of the configuration and the details are possible without departing from the spirit and scope of the claims. Elements according to the embodiment, modifications, and other embodiments may also be combined or replaced as appropriate.

### Industrial Applicability

As has been described above, the present disclosure is useful as a drive system, a turbo compressor, and a refrigeration device.

### Reference Signs List

- 1: turbo compressor
- 2: casing
- 3: impeller
- 10: drive system
- 11: support
- 12: drive unit
- 20: shaft
- 25: measurement portion
- 201: first stepped portion
- 202: second stepped portion
- 30: bearingless motor
- 31: rotor
- 32: stator
- 35: support windings
- 36: drive windings
- 40: magnetic bearing
- 41: radial magnetic bearing
- 42: thrust magnetic bearing
- 50: touchdown bearing
- 60: rotational angle sensor (rotational angle detector)
- 65: rotation reference sensor
- 70: position sensor
- 71: radial position sensor
- 72: thrust position sensor
- 80: signal processing unit
- 81: first processing unit
- 82: second processing unit
- 90: control unit

## Claims

1. A drive system comprising:
a shaft (20);
a support unit (11) configured to support the shaft (20) in a non-contact manner using an electromagnetic force;
a drive unit (12) configured to rotationally drive the shaft (20) using an electromagnetic force;
a rotational angle detector (60) configured to output a first signal (S1) on which a specific frequency component is superimposable, the first signal (S1) having an amplitude that changes in accordance with a change in a rotational angle of the shaft (20);
a signal processing unit (80) configured to generate, based on the first signal (S1) output from the rotational angle detector (60), a second signal (S2) by performing a reduction process for reducing the specific frequency component included in the first signal (S1); and
a control unit (90) configured to control the support unit (11) and the drive unit (12),
wherein
the control unit (90) is configured to detect the rotational angle of the shaft (20) based on the second signal (S2) generated by the signal processing unit (80), and
a frequency of the specific frequency component reduced by the reduction process is lower than a frequency of a first frequency component (C1) included in the first signal (S1), the first frequency component (C1) being an alternating-current frequency component other than a direct-current component and corresponding to the change in the rotational angle of the shaft (20).

2. The drive system according to Claim 1, wherein
the shaft (20) includes a measurement portion (25),
the rotational angle detector (60) is a gap sensor configured to output a signal having an amplitude that changes in accordance with a distance from the measurement portion (25),
the measurement portion (25) is configured to change in distance from the rotational angle detector (60) in accordance with the change in the rotational angle of the shaft (20), and
the first frequency component (C1) is a frequency corresponding to a rotational frequency of the shaft (20) that is rotationally driven by the drive unit (12) and a shape of the measurement portion (25).

3. The drive system according to Claim 1 or 2, wherein
the specific frequency component reduced by the reduction process includes a frequency component having a largest amplitude among frequency components lower than the frequency of the first frequency component (C1).

4. The drive system according to Claim 1 or 2, wherein
the specific frequency component reduced by the reduction process includes a shaft runout component (CX) with a largest amplitude among a plurality of shaft runout components (CX) corresponding to a runout from a reference position of the shaft (20) supported in the non-contact manner.

5. The drive system according to any one of Claims 1 to 4, wherein
the reduction process is a process for reducing a frequency component in a specific frequency band included in the first signal (S1), and
the specific frequency band is a frequency band including the frequency of the specific frequency component and is a frequency band lower than the frequency of the first frequency component (C1).

6. The drive system according to any one of Claims 1 to 5, wherein
the signal processing unit (80) is configured to include:
a first processing unit (81) configured to generate, based on the first signal (S1), a threshold (Th1) corresponding to the specific frequency component; and
a second processing unit (82) configured to generate the second signal (S2) by comparing the amplitude of the first signal (S1) and the threshold (Th1) generated by the first processing unit (81).

7. The drive system according to Claim 6, wherein
the first processing unit (81) is configured to generate the threshold (Th1) by extracting a frequency component in a specific frequency band included in the first signal (S1), and
the specific frequency band is a frequency band including the frequency of the specific frequency component and is a frequency band lower than the frequency of the first frequency component (C1).

8. The drive system according to Claim 6,wherein
the first processing unit (81) is configured to selectively perform:
a first extraction process for generating the threshold (Th1) by extracting a frequency component in a specific frequency band included in the first signal (S1); and
a second extraction process for generating the threshold (Th1) by extracting a direct-current component from the first signal (S1), and
the specific frequency band is a frequency band including the frequency of the specific frequency component and is a frequency band lower than the frequency of the first frequency component (C1).

9. The drive system according to Claim 6, wherein
the first processing unit (81) is configured to generate the threshold (Th1) by repeating a process of setting a value derived based on the amplitude of the first signal (S1) in a predetermined period as the threshold (Th1).

10. The drive system according to any one of Claims 1 to 5, wherein
the signal processing unit (80) is configured to include:
a first processing unit (81) configured to reduce the specific frequency component included in the first signal (S1); and
a second processing unit (82) configured to generate the second signal (S2) by comparing a signal obtained by the first processing unit (81) and a threshold (Th1).

11. The drive system according to any one of Claims 1 to 10, comprising:
a bearingless motor (30) including a support winding (35) and a drive winding (36),
wherein
the support winding (35) is configured to generate, when energized, the electromagnetic force for supporting the shaft (20) in the non-contact manner and function as the support unit (11), and
the drive winding (36) is configured to generate, when energized, the electromagnetic force for rotationally driving the shaft (20) and function as the drive unit (12).

12. A turbo compressor comprising the drive system according to any one of Claims 1 to 11.

13. A refrigeration device comprising the turbo compressor according to Claim 12.
